# EUROPEAN PATENT SPECIFICATION

(11) **EP 4 278 676 B1**
(45) Date of publication and mention of the grant of the patent: **22.01.2025**
(21) Application number: 21848116.6
(22) Date of filing: 29.12.2021
(51) Int. Cl.: H04W 36/00, H04W 36/14

(54) **INTER-RADIO ACCESS TECHNOLOGY HANDOVER WITH MULTICAST BROADCAST SERVICE CONTINUITY**
WEITERREICHEN ZWISCHEN FUNKZUGANGSTECHNOLOGIEN MIT MULTICAST-BROADCAST-DIENSTKONTINUITÄT
TRANSFERT INTERCELLULAIRE ENTRE DES TECHNOLOGIES D'ACCÈS RADIO AVEC CONTINUITÉ D'UN SERVICE DE DIFFUSION ET DE MULTIDIFFUSION

(30) Priority: 15.01.2021 GR 20210100035
(43) Date of publication of application: 22.11.2023
(73) Proprietor: Qualcomm Incorporated, San Diego, CA 92121-1714 (US)
(72) Inventor: KADIRI, Prasad, Reddy, San Diego, CA 92121 (US); ZHU, Xipeng, San Diego, CA 92121 (US); PHUYAL, Umesh, San Diego, CA 92121 (US); SHRESTHA, Bharat, San Diego, CA 92121 (US); GRIOT, Miguel, San Diego, CA 92121 (US); ZISIMOPOULOS, Haris, San Diego, CA 92121 (US); RICO ALVARINO, Alberto, San Diego, CA 92121 (US); LOPES, Luis, Fernando, Brisson, San Diego, CA 92121 (US); TONESI, Dario, Serafino, San Diego, CA 92121 (US)
(74) Representative: Bardehle Pagenberg Partnerschaft mbB Patentanwälte Rechtsanwälte
(86) International application number: PCT/US2021/073148
(87) International publication number: WO 2022/155016

(56) References cited:
- US-A1- 2014 342 740
- US-A1- 2020 351 720
- ZTE: "Consideration on service continuty of basic mobility in NR MBS", vol. RAN WG3, no. Online; 20200817 - 20200828, 7 August 2020 (2020-08-07), XP051915909, Retrieved from the Internet <URL:https://ftp.3gpp.org/tsg_ran/WG3_Iu/TSGR3_109-e/Docs/R3-205243.zip R3-205243 Consideration on service continuty of basic mobility in NR MBS.doc> [retrieved on 20200807]
- ZTE: "Discussion on Broadcast service continuity in NR MBS", vol. RAN WG3, no. Online; 20201102 - 20201112, 23 October 2020 (2020-10-23), XP051945931, Retrieved from the Internet <URL:https://ftp.3gpp.org/tsg_ran/WG3_Iu/TSGR3_110-e/Docs/R3-206534.zip R3-206534 Discussion on Broadcast service continuity in NR MBS.doc> [retrieved on 20201023]

## Description

### FIELD OF THE DISCLOSURE

Aspects of the present disclosure generally relate to wireless communication and specifically, to techniques and apparatuses for inter-radio access technology (inter-RAT) handover with multicast broadcast service continuity.

### BACKGROUND

Wireless communication systems are widely deployed to provide various telecommunication services such as telephony, video, data, messaging, and broadcasts. Typical wireless communication systems may employ multiple-access technologies capable of supporting communication with multiple users by sharing available system resources (for example, bandwidth or transmit power). Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, time division synchronous code division multiple access (TD-SCDMA) systems, and Long Term Evolution (LTE). LTE/LTE-Advanced is a set of enhancements to the Universal Mobile Telecommunications System (UMTS) mobile standard promulgated by the Third Generation Partnership Project (3GPP).

The above multiple access technologies have been adopted in various telecommunication standards to provide a common protocol that enables different UEs to communicate on a municipal, national, regional, or global level. New Radio (NR), which may be referred to as 5G, is a set of enhancements to the LTE mobile standard promulgated by the 3GPP. NR is designed to better support mobile broadband internet access by improving spectral efficiency, lowering costs, improving services, making use of new spectrum, and better integrating with other open standards using orthogonal frequency division multiplexing (OFDM) with a cyclic prefix (CP) (CP-OFDM) on the downlink, using CP-OFDM or single-carrier frequency division multiplexing (SC-FDM) (also known as discrete Fourier transform spread OFDM (DFT-s-OFDM)) on the uplink, as well as supporting beamforming, multiple-input multiple-output (MIMO) antenna technology, and carrier aggregation. As the demand for mobile broadband access continues to increase, further improvements in LTE, NR, and other radio access technologies remain useful.

During an inter-radio access technology (inter-RAT) handover procedure (for example, from an eNB to a gNB or from a gNB to an eNB), a multicast or broadcast (MB) service may be interrupted for a UE. For example, the MB service may not be available via a target base station or via a frequency used by the UE to connect to or communicate with the target base station. As another example, the UE may experience packet loss during the handover. For example, the packet loss may be due to delays in configuring a multicast radio bearer (MRB) for the UE, delays in switching to a unicast dedicated radio bearer (DRB) prior to handover, or a failure to switch to a unicast DRB prior to handover.
US 2014/342740 A1 discloses a method for receiving a service by means of a user equipment connected to a first network in a wireless communication system. More particularly, the method comprises: a step of transmitting, to a first network, a first message for radio access technology (RAT) change to a second network; a step of accessing the second network; and a step of receiving the service from the second network, wherein the service is provided only in the second network.
Document ZTE: "Consideration an service continuty of basic mobility in NR MBS", 3GPP TSG RAN WG3 #109-e, R3-205243, August 17-28, 2020 discusses issues on mobility with service continuity in R-17-MBS. It is proposed to consider enhancement for multicast session to the current HO procedure for RRC_CONNECTED UE from the following two aspects: 1) HO request, e.g., to include UE's associated Multicast session context; 2) HO request ack, e.g., to include the scheduling information to source gNB.

### SUMMARY

The invention is defined by the independent claims. In some aspects, a method of wireless communication performed by a user equipment (UE) includes receiving, via a first radio access technology (RAT) associated with a source base station, system information that identifies a set of frequencies of a second RAT and one or more multicast or broadcast (MB) services available via one or more frequencies of the set of frequencies. The method may include communicating, with the source base station or a core network device, to trigger a switch from a first MRB, of the first RAT, to a first unicast dedicated radio bearer (DRB), of the first RAT, for reception of an MB service, of the one or more MB services, via the first RAT. The method may include transmitting, to the source base station, an indication that indicates at least one of the MB service or a frequency, of the one or more frequencies, via which the MB service is available via the second RAT. The method may include receiving, from the source base station or a target base station, an MRB configuration associated with receiving the MB service via the target base station using the second RAT. The method may include communicating, with the target base station, based at least in part on switching from a second unicast DRB, of the second RAT, to a second MRB, of the second RAT, after handover from the source base station to the target base station and based at least in part on the MRB configuration.

In some aspects, a method of wireless communication performed by a source base station includes transmitting, via a first RAT, system information that identifies a set of frequencies of a second RAT and one or more MB services available via one or more frequencies of the set of frequencies. The method may include communicating, with a UE, to switch from a first MRB, of the first RAT, to a first unicast DRB, of the first RAT, for transmission of an MB service, of the one or more MB services, to the UE via the first RAT. The method may include receiving, from the UE, an indication that indicates at least one of the MB service or a frequency, of the one or more frequencies, via which the MB service is available via the second RAT. The method may include performing a handover to a target base station based at least in part on the indication.

In some aspects, an apparatus for wireless communication includes means for receiving, via a first RAT associated with a source base station, system information that identifies a set of frequencies of a second RAT and one or more MB services available via one or more frequencies of the set of frequencies. The apparatus may include means for communicating, with the source base station or a core network device, to trigger a switch from a first MRB, of the first RAT, to a first unicast DRB, of the first RAT, for reception of an MB service, of the one or more MB services, via the first RAT. The apparatus may include means for transmitting, to the source base station, an indication that indicates at least one of the MB service or a frequency, of the one or more frequencies, via which the MB service is available via the second RAT. The apparatus may include means for receiving, from the source base station or a target base station, an MRB configuration associated with receiving the MB service via the target base station using the second RAT. The apparatus may include means for communicating, with the target base station, based at least in part on switching from a second unicast DRB, of the second RAT, to a second MRB, of the second RAT, after handover from the source base station to the target base station and based at least in part on the MRB configuration.

In some aspects, an apparatus for wireless communication includes means for transmitting, via a first RAT, system information that identifies a set of frequencies of a second RAT and one or more MB services available via one or more frequencies of the set of frequencies. The apparatus may include means for communicate, with a UE, to switch from a first MRB, of the first RAT, to a first unicast DRB, of the first RAT, for transmission of an MB service, of the one or more MB services, to the UE via the first RAT. The apparatus may include means for receiving, from the UE, an indication that indicates at least one of the MB service or a frequency, of the one or more frequencies, via which the MB service is available via the second RAT. The apparatus may include means for performing a handover to a target base station based at least in part on the indication.

In some aspects, a method, device, apparatus, computer program product, non-transitory computer-readable medium, user equipment, base station, source base station, target base station, node, wireless communication device, or processing system as substantially described herein with reference to and as illustrated by the accompanying drawings and specification.

Aspects generally include a method, apparatus, system, computer program product, non-transitory computer-readable medium, user equipment, base station, wireless communication device, or processing system as substantially described with reference to and as illustrated by the drawings and specification.

The foregoing has outlined rather broadly the features and technical advantages of examples in accordance with the disclosure in order that the detailed description that follows may be better understood. Additional features and advantages will be described hereinafter. The MRB configuration associated with receiving the MB service via the target base station using the second RAT. The one or more instructions may cause the UE to communicate, with the target base station, based at least in part on switching from a second unicast DRB, of the second RAT, to a second MRB, of the second RAT, after handover from the source base station to the target base station and based at least in part on the MRB configuration.

In some aspects, a non-transitory computer-readable medium storing a set of instructions for wireless communication includes one or more instructions that, when executed by one or more processors of a source base station, cause the source base station to transmit, via a first RAT, system information that identifies a set of frequencies of a second RAT and one or more MB services available via one or more frequencies of the set of frequencies. The one or more instructions may cause the source base station to communicate, with a UE, to switch from a first MRB, of the first RAT, to a first unicast DRB, of the first RAT, for transmission of an MB service, of the one or more MB services, to the UE via the first RAT. The one or more instructions may cause the source base station to receive, from the UE, an indication that indicates at least one of the MB service or a frequency, of the one or more frequencies, via which the MB service is available via the second RAT. The one or more instructions may cause the source base station to perform a handover to a target base station based at least in part on the indication.

In some aspects, a non-transitory computer-readable medium storing a set of instructions for wireless communication includes one or more instructions that, when executed by one or more processors of a target base station, cause the target base station to receive, via a source base station that provides an MB service to a UE via a first RAT, a handover request that includes an indication that indicates at least one of an MB service associated with the UE or a frequency, of a set of frequencies of a second RAT, via which the MB service is available via the second RAT. The one or more instructions may cause the target base station to communicate, with the UE, based at least in part on switching from a unicast DRB, that provides the MB service for the second RAT, to an MRB, that provides the MB service for the second RAT, after handover from the source base station to the target base station.

In some aspects, an apparatus for wireless communication includes means for receiving, via a first RAT associated with a source base station, system information that identifies a set of frequencies of a second RAT and one or more MB services available via one or more frequencies of the set of frequencies. The apparatus may include means for communicating, with the source base station or a core network device, to trigger a switch from a first MRB, of the first RAT, to a first unicast DRB, of the first RAT, for reception of an MB service, of the one or more MB services, via the first RAT. The apparatus may include means for transmitting, to the source base station, an indication that indicates at least one of the MB service or a frequency, of the one or more frequencies, via which the MB service is available via the second RAT. The apparatus may include means for receiving, from the source base station or a target base station, an MRB configuration associated with receiving the MB service via the target base station using the second RAT. The apparatus may include means for communicating, with the target base station, based at least in part on switching from a second unicast DRB, of the second RAT, to a second MRB, of the second RAT, after handover from the source base station to the target base station and based at least in part on the MRB configuration.

In some aspects, an apparatus for wireless communication includes means for transmitting, via a first RAT, system information that identifies a set of frequencies of a second RAT and one or more MB services available via one or more frequencies of the set of frequencies. The apparatus may include means for communicate, with a UE, to switch from a first MRB, of the first RAT, to a first unicast DRB, of the first RAT, for transmission of an MB service, of the one or more MB services, to the UE via the first RAT. The apparatus may include means for receiving, from the UE, an indication that indicates at least one of the MB service or a frequency, of the one or more frequencies, via which the MB service is available via the second RAT. The apparatus may include means for performing a handover to a target base station based at least in part on the indication.

In some aspects, an apparatus for wireless communication includes means for receiving, via a source base station that provides an MB service to a UE via a first RAT, a handover request that includes an indication that indicates at least one of an MB service associated with the UE or a frequency, of a set of frequencies of a second RAT, via which the MB service is available via the second RAT. The apparatus may include means for communicating, with the UE, based at least in part on switching from a unicast DRB, that provides the MB service for the second RAT, to an MRB, that provides the MB service for the second RAT, after handover from the source base station to the apparatus.

In some aspects, a method, device, apparatus, computer program product, non-transitory computer-readable medium, user equipment, base station, source base station, target base station, node, wireless communication device, or processing system as substantially described herein with reference to and as illustrated by the accompanying drawings and specification.

Aspects generally include a method, apparatus, system, computer program product, non-transitory computer-readable medium, user equipment, base station, wireless communication device, or processing system as substantially described with reference to and as illustrated by the drawings and specification.

The foregoing has outlined rather broadly the features and technical advantages of examples in accordance with the disclosure in order that the detailed description that follows may be better understood. Additional features and advantages will be described hereinafter. The conception and specific examples disclosed may be readily utilized as a basis for modifying or designing other structures for carrying out the same purposes of the present disclosure. Such equivalent constructions do not depart from the scope of the appended claims. Characteristics of the concepts disclosed herein, both their organization and method of operation, together with associated advantages will be better understood from the following description when considered in connection with the accompanying figures. Each of the figures is provided for the purposes of illustration and description, and not as a definition of the limits of the claims.

### BRIEF DESCRIPTION OF THE DRAWINGS

So that the above-recited features of the present disclosure can be understood in detail, a more particular description, briefly summarized above, may be had by reference to aspects, some of which are illustrated in the appended drawings. It is to be noted, however, that the appended drawings illustrate only some typical aspects of this disclosure and are therefore not to be considered limiting of its scope, for the description may admit to other equally effective aspects. The same reference numbers in different drawings may identify the same or similar elements.
Figure 1 is a diagram illustrating an example of a wireless network in accordance with the present disclosure.
Figure 2 is a diagram illustrating an example base station in communication with a user equipment (UE) in a wireless network in accordance with the present disclosure.
Figure 3 is a diagram illustrating an example of a handover procedure in accordance with the present disclosure.
Figures 4A-4B, 5A-5B, and 6A-6B are diagrams illustrating examples associated with inter-radio access technology (inter-RAT) handover with multicast broadcast service continuity in accordance with the present disclosure.
Figure 7 is a flowchart illustrating an example process performed, for example, by a UE in accordance with the present disclosure.
Figure 8 is a flowchart illustrating an example process performed, for example, by a source base station in accordance with the present disclosure.
Figure 9 is a flowchart illustrating an example process performed, for example, by a target base station in accordance with the present disclosure.
Figures 10-12 are block diagrams of example apparatuses for wireless communication in accordance with the present disclosure.

### DETAILED DESCRIPTION

Various aspects of the disclosure are described more fully hereinafter with reference to the accompanying drawings. This disclosure may, however, be embodied in many different forms and are not to be construed as limited to any specific structure or function presented throughout this disclosure. Rather, these aspects are provided so that this disclosure will be thorough and complete, and will fully convey the scope of the disclosure to those skilled in the art. One skilled in the art may appreciate that the scope of the disclosure is intended to cover any aspect of the disclosure disclosed herein, whether implemented independently of or combined with any other aspect of the disclosure. For example, an apparatus may be implemented or a method may be practiced using any quantity of the aspects set forth herein. In addition, the scope of the disclosure is intended to cover such an apparatus or method which is practiced using other structure, functionality, or structure and functionality in addition to or other than the various aspects of the disclosure set forth herein. Any aspect of the disclosure disclosed herein may be embodied by one or more elements of a claim.

Several aspects of telecommunication systems will now be presented with reference to various apparatuses and techniques. These apparatuses and techniques will be described in the following detailed description and illustrated in the accompanying drawings by various blocks, modules, components, circuits, steps, processes, or algorithms (collectively referred to as "elements"). These elements may be implemented using hardware, software, or a combination of hardware and software. Whether such elements are implemented as hardware or software depends upon the particular application and design constraints imposed on the overall system.

Various aspects relate generally to inter-radio access technology (inter-RAT) handover with multicast or broadcast (MB) service continuity. Some aspects more specifically relate to maintaining service continuity for an MB service when a user equipment (UE) is handed over from an LTE RAT to an NR RAT or from an NR RAT to an LTE RAT. In some aspects, a source base station that operates using a first RAT may transmit (for example, in a system information block) information regarding MB services available via neighbor base stations that operate using a second RAT. In some aspects, the UE may trigger a switch from a multicast radio bearer (MRB) to a unicast dedicated radio bearer (DRB) prior to handover. In some aspects, the UE may transmit, to the source base station prior to handover, an indication of an MB service or a frequency via which the MB service is available via a target base station that operates using the second RAT. In some aspects, the source base station or the target base station may transmit an MRB configuration to the UE to enable the UE to receive the MB service via an MRB of the target base station after handover. In some aspects, the UE may switch from receiving the MB service, from the target base station, via a unicast DRB to the configured MRB after handover.

Particular aspects of the subject matter described in this disclosure can be implemented to realize one or more of the following potential advantages. In some examples, the described techniques can be used to enable MB service continuity when a UE is handed over from a source base station that operates using a first RAT to a target base station that operates using a second RAT. For example, the described techniques can be used to enable the UE to select or prioritize a frequency of the target base station via which the MB service is available, rather than being handed over to a target base station or frequency that does not provide the MB service. As another example, the described techniques may reduce or eliminate packet loss associated with inter-RAT handover by reducing delays in configuring an MRB to be used by the UE to receive an MB service after handover, reducing delays in switching to a unicast DRB for improved reliability prior to handover, or ensuring a switch to the unicast DRB prior to handover, among other examples.

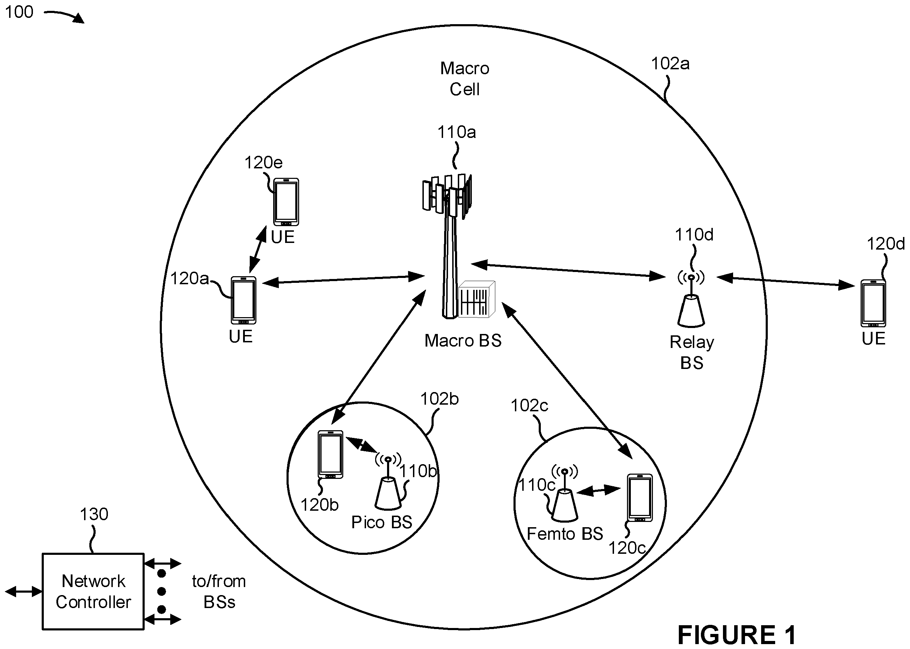

Figure 1 is a diagram illustrating an example of a wireless network in accordance with the present disclosure. The wireless network 100 may be or may include elements of a 5G (for example, NR) network or a 4G (for example, Long Term Evolution (LTE)) network, among other examples. The wireless network 100 may include one or more base stations 110 (shown as a BS 110a, a BS 110b, a BS 110c, and a BS 110d), a user equipment (UE) 120 or multiple UEs 120 (shown as a UE 120a, a UE 120b, a UE 120c, a UE 120d, and a UE 120e), or other network entities. A base station 110 is an entity that communicates with UEs 120. A base station 110 (sometimes referred to as a BS) may include, for example, an NR base station, an LTE base station, a Node B, an eNB (for example, in 4G), a gNB (for example, in 5G), an access point, or a transmission reception point (TRP). Each base station 110 may provide communication coverage for a particular geographic area. In the Third Generation Partnership Project (3GPP), the term "cell" can refer to a coverage area of a base station 110 or a base station subsystem serving this coverage area, depending on the context in which the term is used.

A base station 110 may provide communication coverage for a macro cell, a pico cell, a femto cell, or another type of cell. A macro cell may cover a relatively large geographic area (for example, several kilometers in radius) and may allow unrestricted access by UEs 120 with service subscriptions. A pico cell may cover a relatively small geographic area and may allow unrestricted access by UEs 120 with service subscription. A femto cell may cover a relatively small geographic area (for example, a home) and may allow restricted access by UEs 120 having association with the femto cell (for example, UEs 120 in a closed subscriber group (CSG)). A base station 110 for a macro cell may be referred to as a macro base station. A base station 110 for a pico cell may be referred to as a pico base station. A base station 110 for a femto cell may be referred to as a femto base station or an in-home base station.

The wireless network 100 may be a heterogeneous network that includes base stations 110 of different types, such as macro base stations, pico base stations, femto base stations, or relay base stations. These different types of base stations 110 may have different transmit power levels, different coverage areas, or different impacts on interference in the wireless network 100. For example, macro base stations may have a high transmit power level (for example, 5 to 40 watts) whereas pico base stations, femto base stations, and relay base stations may have lower transmit power levels (for example, 0.1 to 2 watts). In the example shown in Figure 1, the BS 110a may be a macro base station for a macro cell 102a, the BS 110b may be a pico base station for a pico cell 102b, and the BS 110c may be a femto base station for a femto cell 102c. A base station may support one or multiple (for example, three) cells. A network controller 130 may couple to or communicate with a set of base stations 110 and may provide coordination and control for these base stations 110. The network controller 130 may communicate with the base stations 110 via a backhaul communication link. The base stations 110 may communicate with one another directly or indirectly via a wireless or wireline backhaul communication link.

In some examples, a cell may not necessarily be stationary, and the geographic area of the cell may move in accordance with the location of a base station 110 that is mobile (for example, a mobile base station). In some examples, the base stations 110 may be interconnected to one another or to one or more other base stations 110 or network nodes (not shown) in the wireless network 100 through various types of backhaul interfaces, such as a direct physical connection or a virtual network, using any suitable transport network.

The wireless network 100 may include one or more relay stations. A relay station is an entity that can receive a transmission of data from an upstream station (for example, a base station 110 or a UE 120) and send a transmission of the data to a downstream station (for example, a UE 120 or a base station 110). A relay station may be a UE 120 that can relay transmissions for other UEs 120. In the example shown in Figure 1, the BS 110d (for example, a relay base station) may communicate with the BS 110a (for example, a macro base station) and the UE 120d in order to facilitate communication between the BS 110a and the UE 120d. A base station 110 that relays communications may be referred to as a relay station, a relay base station, or a relay.

The UEs 120 may be dispersed throughout the wireless network 100, and each UE 120 may be stationary or mobile. A UE 120 may include, for example, an access terminal, a terminal, a mobile station, or a subscriber unit. A UE 120 may be a cellular phone (for example, a smart phone), a personal digital assistant (PDA), a wireless modem, a wireless communication device, a handheld device, a laptop computer, a cordless phone, a wireless local loop (WLL) station, a tablet, a camera, a gaming device, a netbook, a smartbook, an ultrabook, a medical device, a biometric device, a wearable device (for example, a smart watch, smart clothing, smart glasses, a smart wristband, smart jewelry (for example, a smart ring or a smart bracelet)), an entertainment device (for example, a music device, a video device, or a satellite radio), a vehicular component or sensor, a smart meter/sensor, industrial manufacturing equipment, a global positioning system device, or any other suitable device that is configured to communicate via a wireless medium.

Some UEs 120 may be considered machine-type communication (MTC) or evolved or enhanced machine-type communication (eMTC) UEs. An MTC UE or an eMTC UE may include, for example, a robot, a drone, a remote device, a sensor, a meter, a monitor, or a location tag, that may communicate with a base station, another device (for example, a remote device), or some other entity. A wireless node may provide, for example, connectivity for or to a network (for example, a wide area network such as Internet or a cellular network) via a wired or wireless communication link. Some UEs Some UEs 120 may be considered Internet-of Things (IoT) devices, or may be implemented as NB-IoT (narrowband IoT) devices. Some UEs 120 may be considered a Customer Premises Equipment. A UE 120 may be included inside a housing that houses components of the UE 120, such as processor components or memory components. In some examples, the processor components and the memory components may be coupled together. For example, the processor components (for example, one or more processors) and the memory components (for example, a memory) may be operatively coupled, communicatively coupled, electronically coupled, or electrically coupled.

In general, any quantity of wireless networks 100 may be deployed in a given geographic area. Each wireless network 100 may support a particular RAT and may operate on one or more frequencies. A RAT may be referred to as a radio technology or an air interface. A frequency may be referred to as a carrier or a frequency channel. Each frequency may support a single RAT in a given geographic area in order to avoid interference between wireless networks of different RATs. In some cases, NR or 5G RAT networks may be deployed.

In some examples, two or more UEs 120 (for example, shown as UE 120a and UE 120e) may communicate directly using one or more side link channels (for example, without using a base station 110 as an intermediary to communicate with one another). For example, the UEs 120 may communicate using peer-to-peer (P2P) communications, device-to-device (D2D) communications, a vehicle-to-everything (V2X) protocol (for example, which may include a vehicle-to-vehicle (V2V) protocol, a vehicle-to-infrastructure (V2I) protocol, or a vehicle-to-pedestrian (V2P) protocol), or a mesh network. In such examples, a UE 120 may perform scheduling operations, resource selection operations, or other operations described elsewhere herein as being performed by the base station 110.

Devices of the wireless network 100 may communicate using the electromagnetic spectrum, which may be subdivided by frequency or wavelength into various classes, bands, or channels. For example, devices of the wireless network 100 may communicate using one or more operating bands. In 5G NR, two initial operating bands have been identified as frequency range designations FR1 (410 MHz - 7.125 GHz) and FR2 (24.25 GHz - 52.6 GHz). It should be understood that although a portion of FR1 is greater than 6 GHz, FR1 is often referred to (interchangeably) as a "Sub-6 GHz" band in various documents and articles. A similar nomenclature issue sometimes occurs in connection with FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

The frequencies between FR1 and FR2 are often referred to as mid-band frequencies. Recent 5G NR studies have identified an operating band for these mid-band frequencies as frequency range designation FR3 (7.125 GHz - 24.25 GHz). Frequency bands falling within FR3 may inherit FR1 characteristics or FR2 characteristics, and thus may effectively extend features of FR1 or FR2 into mid-band frequencies. In addition, higher frequency bands are currently being explored to extend 5G NR operation beyond 52.6 GHz. For example, three higher operating bands have been identified as frequency range designations FR4a or FR4-1 (52.6 GHz - 71 GHz), FR4 (52.6 GHz - 114.25 GHz), and FR5 (114.25 GHz - 300 GHz). Each of these higher frequency bands falls within the EHF band.

With the above examples in mind, unless specifically stated otherwise, it should be understood that the term "sub-6 GHz," if used herein, may broadly represent frequencies that may be less than 6 GHz, may be within FR1, or may include mid-band frequencies. Further, unless specifically stated otherwise, it should be understood that the term "millimeter wave," if used herein, may broadly represent frequencies that may include mid-band frequencies, may be within FR2, FR4, FR4-a or FR4-1, or FR5, or may be within the EHF band. It is contemplated that the frequencies included in these operating bands (for example, FR1, FR2, FR3, FR4, FR4-a, FR4-1, or FR5) may be modified, and techniques described herein are applicable to those modified frequency ranges.

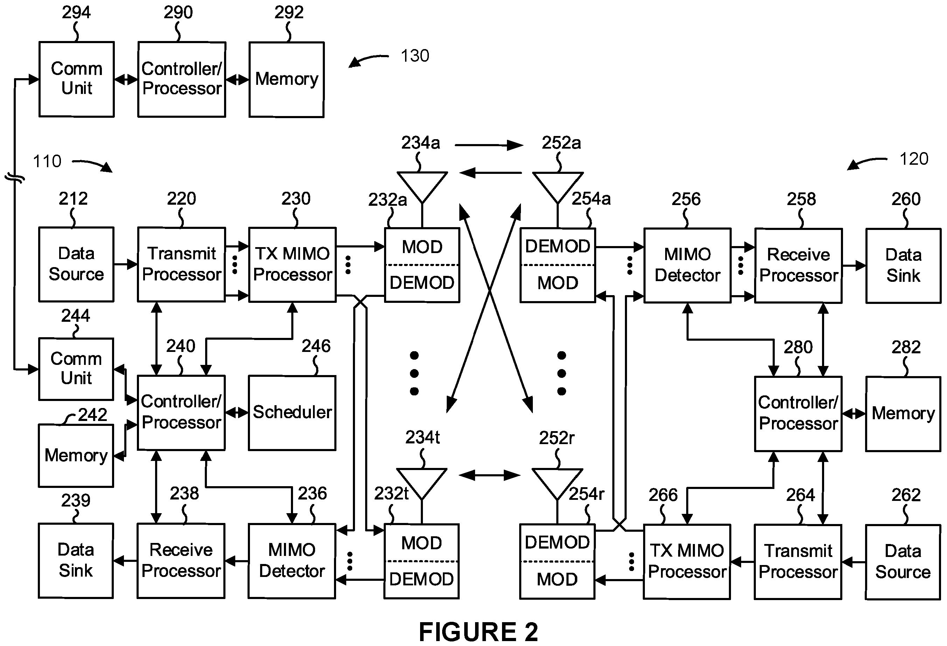

Figure 2 is a diagram illustrating an example base station in communication with a UE in a wireless network in accordance with the present disclosure. The base station may correspond to the base station 110 of Figure 1. Similarly, the UE may correspond to the UE 120 of Figure 1. The base station 110 may be equipped with a set of antennas 234a through 234t, such as T antennas (T ≥ 1). The UE 120 may be equipped with a set of antennas 252a through 252r, such as R antennas (R ≥ 1).

At the base station 110, a transmit processor 220 may receive data, from a data source 212, intended for the UE 120 (or a set of UEs 120). The transmit processor 220 may select one or more modulation and coding schemes (MCSs) for the UE 120 based at least in part on one or more channel quality indicators (CQIs) received from that UE 120. The base station 110 may process (for example, encode and modulate) the data for the UE 120 based at least in part on the MCS(s) selected for the UE 120 and may provide data symbols for the UE 120. The transmit processor 220 may process system information (for example, for semi-static resource partitioning information (SRPI)) and control information (for example, CQI requests, grants, or upper layer signaling) and provide overhead symbols and control symbols. The transmit processor 220 may generate reference symbols for reference signals (for example, a cell-specific reference signal (CRS) or a demodulation reference signal (DMRS)) and synchronization signals (for example, a primary synchronization signal (PSS) or a secondary synchronization signal (SSS)). A transmit (TX) multiple-input multiple-output (MIMO) processor 230 may perform spatial processing (for example, precoding) on the data symbols, the control symbols, the overhead symbols, or the reference symbols, if applicable, and may provide a set of output symbol streams (for example, T output symbol streams) to a corresponding set of modems 232 (for example, T modems), shown as modems 232a through 232t. For example, each output symbol stream may be provided to a modulator component (shown as MOD) of a modem 232. Each modem 232 may use a respective modulator component to process a respective output symbol stream (for example, for OFDM) to obtain an output sample stream. Each modem 232 may further use a respective modulator component to process (for example, convert to analog, amplify, filter, or upconvert) the output sample stream to obtain a downlink signal. The modems 232a through 232t may transmit a set of downlink signals (for example, T downlink signals) via a corresponding set of antennas 234 (for example, T antennas), shown as antennas 234a through 234t.

At the UE 120, a set of antennas 252 (shown as antennas 252a through 252r) may receive the downlink signals from the base station 110 or other base stations 110 and may provide a set of received signals (for example, R received signals) to a set of modems 254 (for example, R modems), shown as modems 254a through 254r. For example, each received signal may be provided to a demodulator component (shown as DEMOD) of a modem 254. Each modem 254 may use a respective demodulator component to condition (for example, filter, amplify, downconvert, or digitize) a received signal to obtain input samples. Each modem 254 may use a demodulator component to further process the input samples (for example, for OFDM) to obtain received symbols. A MIMO detector 256 may obtain received symbols from the modems 254, may perform MIMO detection on the received symbols if applicable, and may provide detected symbols. A receive processor 258 may process (for example, demodulate and decode) the detected symbols, may provide decoded data for the UE 120 to a data sink 260, and may provide decoded control information and system information to a controller/processor 280. The term "controller/processor" may refer to one or more controllers, one or more processors, or a combination thereof. A channel processor may determine a reference signal received power (RSRP) parameter, a received signal strength indicator (RSSI) parameter, a reference signal received quality (RSRQ) parameter, or a CQI parameter, among other examples. In some examples, one or more components of the UE 120 may be included in a housing.

The network controller 130 may include a communication unit 294, a controller/processor 290, and a memory 292. The network controller 130 may include, for example, one or more devices in a core network. The network controller 130 may communicate with the base station 110 via the communication unit 294.

One or more antennas (for example, antennas 234a through 234t or antennas 252a through 252r) may include, or may be included within, one or more antenna panels, one or more antenna groups, one or more sets of antenna elements, or one or more antenna arrays, among other examples. An antenna panel, an antenna group, a set of antenna elements, or an antenna array may include one or more antenna elements (within a single housing or multiple housings), a set of coplanar antenna elements, a set of non-coplanar antenna elements, or one or more antenna elements coupled to one or more transmission or reception components, such as one or more components of Figure 2.

On the uplink, at the UE 120, a transmit processor 264 may receive and process data from a data source 262 and control information (for example, for reports that include RSRP, RSSI, RSRQ, or CQI) from the controller/processor 280. The transmit processor 264 may generate reference symbols for one or more reference signals. The symbols from the transmit processor 264 may be precoded by a TX MIMO processor 266 if applicable, further processed by the modems 254 (for example, for DFT-s-OFDM or CP-OFDM), and transmitted to the base station 110. In some examples, the modem 254 of the UE 120 may include a modulator and a demodulator. In some examples, the UE 120 includes a transceiver. The transceiver may include any combination of the antenna(s) 252, the modem(s) 254, the MIMO detector 256, the receive processor 258, the transmit processor 264, or the TX MIMO processor 266. The transceiver may be used by a processor (for example, the controller/processor 280) and the memory 282 to perform aspects of any of the methods described herein.

At the base station 110, the uplink signals from UE 120 or other UEs may be received by the antennas 234, processed by the modem 232 (for example, a demodulator component, shown as DEMOD, of the modem 232), detected by a MIMO detector 236 if applicable, and further processed by a receive processor 238 to obtain decoded data and control information sent by the UE 120. The receive processor 238 may provide the decoded data to a data sink 239 and provide the decoded control information to the controller/processor 240. The base station 110 may include a communication unit 244 and may communicate with the network controller 130 via the communication unit 244. The base station 110 may include a scheduler 246 to schedule one or more UEs 120 for downlink or uplink communications. In some examples, the modem 232 of the base station 110 may include a modulator and a demodulator. In some examples, the base station 110 includes a transceiver. The transceiver may include any combination of the antenna(s) 234, the modem(s) 232, the MIMO detector 236, the receive processor 238, the transmit processor 220, or the TX MIMO processor 230. The transceiver may be used by a processor (for example, the controller/processor 240) and the memory 242 to perform aspects of any of the methods described herein.

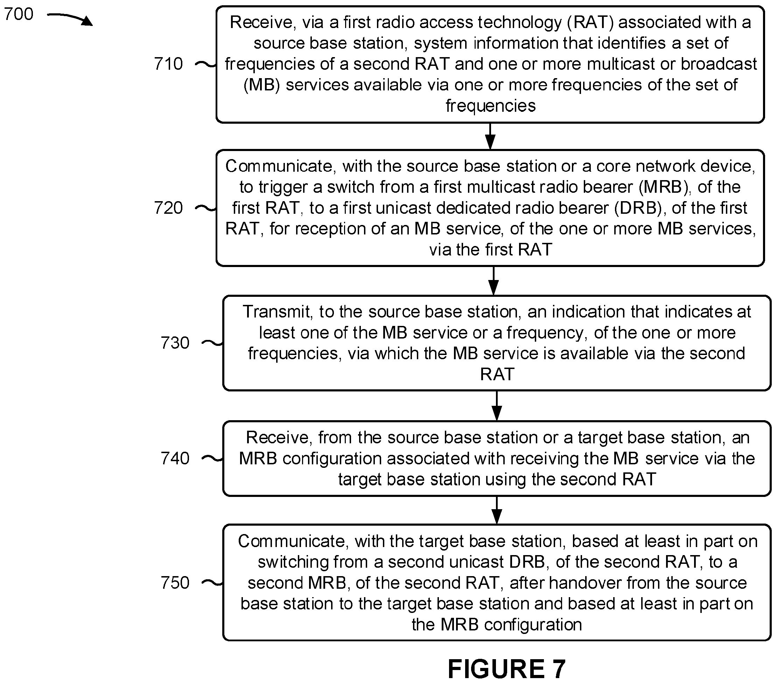

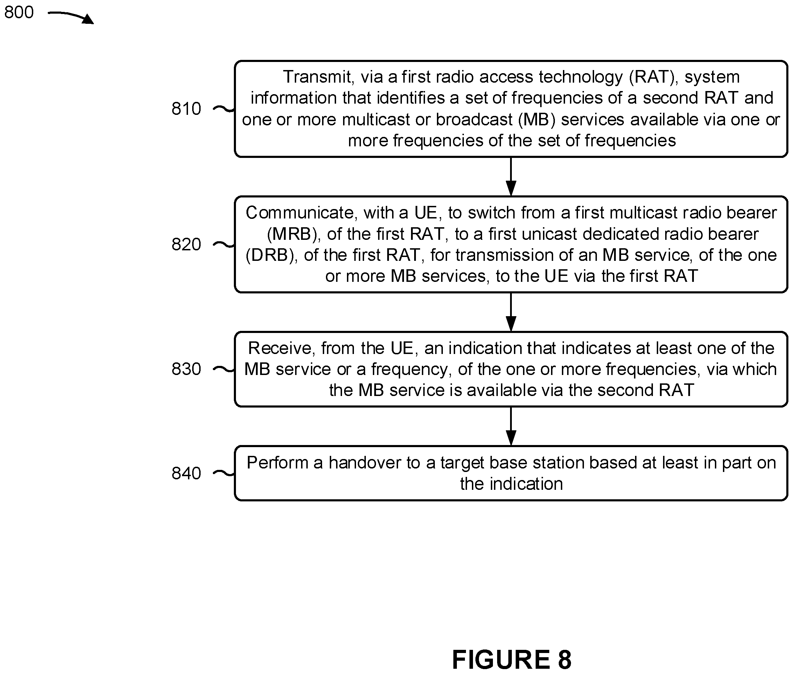

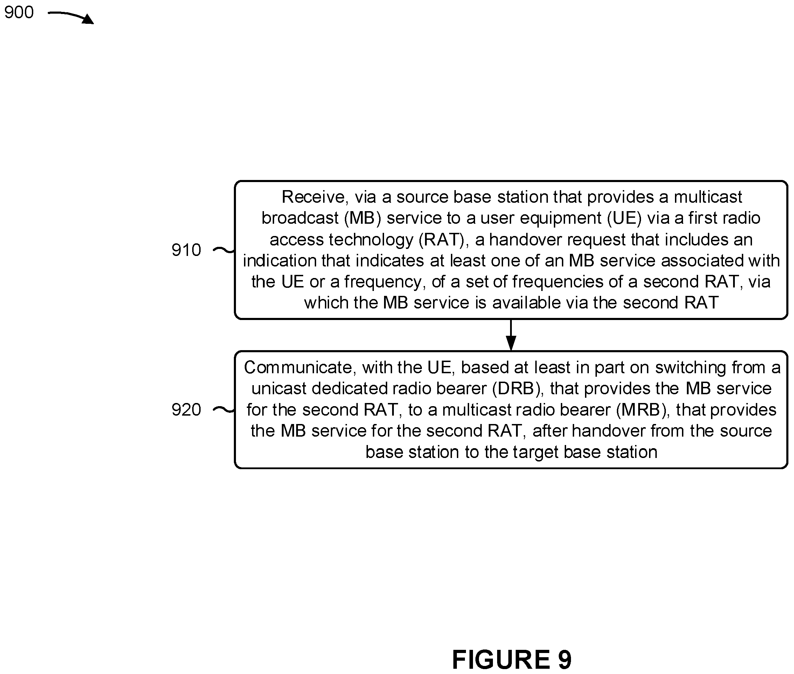

The controller/processor 240 of the base station 110, the controller/processor 280 of the UE 120, or any other component(s) of Figure 2 may perform one or more techniques associated with inter-RAT handover with multicast broadcast service continuity, as described in more detail elsewhere herein. For example, the controller/processor 240 of the base station 110, the controller/processor 280 of the UE 120, or any other component(s) of Figure 2 may perform or direct operations of, for example, process 700 of Figure 7, process 800 of Figure 8, process 900 of Figure 9, or other processes as described herein. The memory 242 and the memory 282 may store data and program codes (for example, processor-readable codes) for the base station 110 and the UE 120, respectively. In some examples, the memory 242 or the memory 282 may include a non-transitory computer-readable medium storing one or more instructions (for example, code, processor-readable code, or program code) for wireless communication. For example, the one or more instructions (for example, the processor-readable code), when executed (for example, directly, or after compiling, converting, or interpreting) by one or more processors of the base station 110 or the UE 120, may cause the one or more processors, the UE 120, or the base station 110 to perform or direct operations of, for example, process 700 of Figure 7, process 800 of Figure 8, process 900 of Figure 9, or other processes as described herein. In some examples, executing instructions may include running the instructions, converting the instructions, compiling the instructions, or interpreting the instructions, among other examples.

In some aspects, the UE includes means for receiving, via a first RAT associated with a source base station, system information that identifies a set of frequencies of a second RAT and one or more multicast or broadcast (MB) services available via one or more frequencies of the set of frequencies; means for communicating, with the source base station or a core network device, to trigger a switch from a first multicast radio bearer (MRB), of the first RAT, to a first unicast dedicated radio bearer (DRB), of the first RAT, for reception of an MB service, of the one or more MB services, via the first RAT; means for transmitting, to the source base station, an indication that indicates at least one of the MB service or a frequency, of the one or more frequencies, via which the MB service is available via the second RAT; means for receiving, from the source base station or a target base station, an MRB configuration associated with receiving the MB service via the target base station using the second RAT; or means for communicating, with the target base station, based at least in part on switching from a second unicast DRB, of the second RAT, to a second MRB, of the second RAT, after handover from the source base station to the target base station and based at least in part on the MRB configuration. The means for the UE to perform operations described herein may include, for example, one or more of antenna 252, modem 254, MIMO detector 256, receive processor 258, transmit processor 264, TX MIMO processor 266, controller/processor 280, or memory 282.

In some aspects, the UE includes means for receiving a configuration that indicates a mapping between at least one of: an MB session identifier, that identifies the MB service in the second RAT, and a temporary mobile group identity (TMGI) that identifies the MB service in both the first RAT and the second RAT, or a multicast broadcast multimedia service (MBMS) service area identity (SAI), that identifies the MB service in the first RAT, and the TMGI that identifies the MB service in both the first RAT and the second RAT. In some aspects, the UE includes means for determining the frequency, of the set of frequencies, via which the MB service is available. In some aspects, the UE includes means for prioritizing one or more frequencies of the second RAT for cell reselection based at least in part on corresponding availability of the MB service on each of the one or more frequencies. In some aspects, the UE includes means for receiving a configuration that indicates one or more radio channel parameter thresholds.

In some aspects, the source base station includes means for transmitting, via a first RAT, system information that identifies a set of frequencies of a second RAT and one or more MB services available via one or more frequencies of the set of frequencies; means for communicating, with a UE, to switch from a first MRB, of the first RAT, to a first unicast DRB, of the first RAT, for transmission of an MB service, of the one or more MB services, to the UE via the first RAT; means for receiving, from the UE, an indication that indicates at least one of the MB service or a frequency, of the one or more frequencies, via which the MB service is available via the second RAT; or means for performing a handover to a target base station based at least in part on the indication. The means for the source base station to perform operations described herein may include, for example, one or more of transmit processor 220, TX MIMO processor 230, modulator 232, antenna 234, modem 232, MIMO detector 236, receive processor 238, controller/processor 240, memory 242, or scheduler 246.

In some aspects, the source base station includes means for transmitting a configuration that indicates a mapping between at least one of: an MB session identifier, that identifies the MB service in the second RAT, and a temporary mobile group identity (TMGI) that identifies the MB service in both the first RAT and the second RAT, or a multicast broadcast multimedia service (MBMS) service area identity (SAI), that identifies the MB service in the first RAT, and the TMGI that identifies the MB service in both the first RAT and the second RAT. In some aspects, the source base station includes means for transmitting a configuration that indicates one or more radio channel parameter thresholds to be used to trigger a switch from the first MRB to the first unicast DRB.

In some aspects, the target base station includes means for receiving, via a source base station that provides an MB service to a UE via a first RAT, a handover request that includes an indication that indicates at least one of an MB service associated with the UE or a frequency, of a set of frequencies of a second RAT, via which the MB service is available via the second RAT; or means for communicating, with the UE, based at least in part on switching from a unicast DRB, that provides the MB service for the second RAT, to an MRB, that provides the MB service for the second RAT, after handover from the source base station to the target base station. The means for the target base station to perform operations described herein may include, for example, one or more of transmit processor 220, TX MIMO processor 230, modem 232, antenna 234, demodulator 232, MIMO detector 236, receive processor 238, controller/processor 240, memory 242, or scheduler 246.

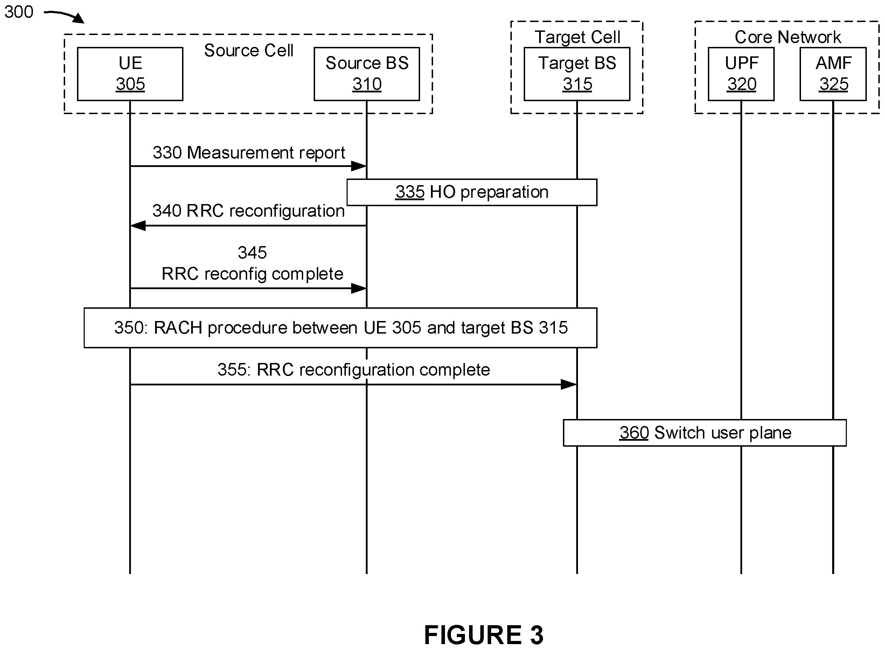

Figure 3 is a diagram illustrating an example of a handover procedure 300 in accordance with the present disclosure. As shown in Figure 3, a handover procedure may involve a UE 305, a source base station 310, a target base station 315, a user plane function (UPF) device 320, and an access and mobility management function (AMF) device 325. The UE 305 may correspond to the UE 120 described elsewhere herein. The source base station 310 or the target base station 315 may correspond to the base station 110 described elsewhere herein. The UPF device 320 or the AMF device 325 may correspond to the network controller 130 described elsewhere herein. The UE 305 and the source base station 310 may be connected (for example, may have a radio resource control (RRC) connection) via a serving cell or a source cell, and the UE 305 may undergo a handover to the target base station 315 via a target cell. The UPF device 320 and the AMF device 325 may be located within a core network. The source base station 310 and the target base station 315 may be in communication with the core network for mobility support and user plane functions.

In a first operation 330, the UE 305 may perform one or more measurements, and may transmit a measurement report to the source base station 310 based at least in part on performing the one or more measurements (for example, serving cell measurements or neighbor cell measurements). The measurement report may indicate, for example, a reference signal received power (RSRP) parameter, a reference signal received quality (RSRQ) parameter, a received signal strength indicator (RSSI) parameter, or a signal-to-interference-plus-noise-ratio (SINR) parameter (for example, for the serving cell or one or more neighbor cells). The source base station 310 may use the measurement report to determine whether to trigger a handover to the target base station 315. For example, if one or more measurements satisfy a condition, then the source base station 310 may trigger a handover of the UE 305 to the target base station 315.

In a second operation 335, the source base station 310 and the target base station 315 may communicate with one another to prepare for a handover of the UE 305. As part of the handover preparation, the source base station 310 may transmit a handover request to the target base station 315 to instruct the target base station 315 to prepare for the handover. The source base station 310 may communicate RRC context information associated with the UE 305 and configuration information associated with the UE 305 to the target base station 315. The target base station 315 may prepare for the handover by reserving resources for the UE 305. After reserving the resources, the target base station 315 may transmit an acknowledgement (ACK) to the source base station 310 in response to the handover request.

In a third operation 340, the source base station 310 may transmit an RRC reconfiguration message to the UE 305. The RRC reconfiguration message may include a handover command instructing the UE 305 to execute a random access procedure with the target base station 315. The handover command may include information associated with the target base station 315, such as a random access channel (RACH) preamble assignment for accessing the target base station 315. In a fourth operation 345, in a conditional handover (CHO) scenario, the UE 305 may transmit an RRC reconfiguration complete message to the source base station 310, such as to acknowledge receipt of the RRC reconfiguration message and to signal that the UE 305 is executing handover. In the normal handover scenario, the source base station 310 stops data transmission to and reception from the UE 305 after transmitting the RRC reconfiguration message to the UE 305. In a CHO scenario, the UE 305 may transmit the RRC reconfiguration complete message to the source base station 310 to acknowledge receipt of a CHO configuration that includes one or more CHO execution criteria, and to acknowledge that the UE 305 will execute handover when the one or more CHO execution criteria are satisfied.

In a fifth operation 350, the UE 305 may execute the handover by performing a random access procedure with the target base station 315 (for example, including synchronization with the target base station 315). In a normal handover scenario, the UE 305 performs the random access procedure with the target base station 315 after receiving the RRC reconfiguration message from the source base station 310. In a conditional handover scenario, the UE 305 maintains a communication link with the source base station 310 and evaluates the CHO execution criteria. When the UE 305 determines that the CHO execution criteria have been satisfied for the target base station 315, the UE 305 will stop communicating with the source base station 310 and will initiate a RACH procedure with the target base station 315.

In a sixth operation 355, upon successfully establishing a connection with the target base station 315 (for example, via a random access procedure), the UE may transmit an RRC reconfiguration complete message to the target base station 315. In the conditional handover scenario, the target base station 315 may transmit a handover connection setup completion message to the source base station 310. The handover connection setup completion message may cause the source base station 310 to release a connection with the UE 305 (for example, to stop transmitting data to the UE 305 or to stop receiving data from the UE 305).

In a seventh operation 360, the target base station 315, the UPF device 320, or the AMF device 325 may communicate to switch a user plane path of the UE 305 from the source base station 310 to the target base station 315. Prior to switching the user plane path, downlink communications for the UE 305 may be routed through the core network to the source base station 310. After the user plane path is switched, downlink communications for the UE 305 may be routed through the core network to the target base station 315. Upon completing the switch of the user plane path, the AMF device 325 may transmit an end marker message to the source base station 310 to signal completion of the user plane path switch.

In some examples, a UE 305, that is receiving a multicast or broadcast (MB) service from an application server via a multicast radio bearer (MRB), may undergo a handover procedure from a source base station 310 that is associated with a first radio access technology (RAT) to a target base station 315 that is associated with a second RAT. For example, the source base station 310 may be an eNB that is associated with an LTE RAT (sometimes called a 4G RAT), and the target base station 315 may be a gNB that is associated with an NR RAT (sometimes called a 5G RAT). Alternatively, the source base station 310 may be a gNB that is associated with an NR RAT, and the target base station 315 may be an eNB that is associated with an LTE RAT.

If the source base station 310 is an eNB that operates using an LTE RAT, then the UE 305 may receive an MB service via the LTE RAT as an evolved multimedia broadcast multicast service (eMBMS). When a cell condition between the source base station 310 and the UE 305 degrades below a threshold (for example, as indicated by UE measurements), the UE 305 may notify the application server about the cell condition, such as by indicating that the UE 305 has entered a border of an eMBMS (or an MBMS) service area. The application server may then transmit a request to a network controller of a core network of the LTE RAT (for example, a device in an evolved packet core (EPC) system) to configure a unicast evolved packet system (EPS) bearer associated with a unicast dedicated radio bearer (DRB) for the UE 305. The application server may then deliver the MB service to the UE 305 via the source base station 310 using the unicast EPS bearer associated with the unicast DRB rather than the MRB. The UE may undergo a handover from the source base station 310 to the target base station 315 (for example, a gNB that operates using the NR RAT) via an inter-RAT handover procedure. After the handover procedure, the MB service is delivered to the UE 305 via an NR unicast protocol data unit (PDU) session (for example, after the UE 305 is handed over to the target base station 315 and after the UE 305 notifies the application server about the cell condition as described above, which may happen before or after the handover). A multicast broadcast session management function (MB-SMF) may then request that the target base station 315 switch from delivering the MB service via the unicast PDU session to a shared MB tunnel (for example, for point-to-multipoint delivery).

If the source base station 310 is a gNB that operates using an NR RAT, then the UE 305 may receive an MB service via the NR RAT as an NR multicast broadcast service (MBS). In NR MBS, the UE 305 is configured with an MRB for a multicast or broadcast session (MBS) and an associated unicast DRB for a unicast PDU session (for example, with a one-to-one mapping between the MBS, mapped to the MRB, and the unicast PDU session, mapped to the DRB). When a cell condition between the source base station 310 and the UE 305 degrades below a threshold (for example, as indicated by UE measurements), then the 5G RAN network will switch the UE 305 from receiving the MB service via the MRB to receiving the MB service via the unicast DRB. The UE may undergo a handover from the source base station 310 to the target base station 315 (for example, an eNB that operates using the LTE RAT) via an inter-RAT handover procedure. After the handover procedure, the MB service is delivered to the UE 305 as an eMBMS service via a unicast DRB, such as a unicast evolved packet system (EPS) bearer. The UE 305 may then detect the availability of the MB service via the eNB and the LTE RAT by reading an LTE system information block (SIB), and the UE 305 may report availability of the MB service to an application server. The application server may then cause a switch from the unicast DRB to an MRB (for example, an eMBMS bearer) for delivery of the MB service to the UE 305.

During the inter-RAT handover procedures described above (for example, from an eNB to a gNB or from a gNB to an eNB), the MB service may be interrupted for the UE 305. For example, the MB service may not be available via the target base station 315 or via a frequency used by the UE 305 to connect to or communicate with the target base station 315. As another example, the UE 305 may experience packet loss during the handover. For example, the packet loss may be due to delays in configuring an MRB for the UE 305, delays in switching to a unicast DRB prior to handover, or a failure to switch to a unicast DRB prior to handover.

Various aspects relate generally to inter-RAT handover with MB service continuity. Some aspects more specifically relate to maintaining service continuity for an MB service when a UE is handed over from an LTE RAT to an NR RAT or from an NR RAT to an LTE RAT. In some aspects, a source base station that operates using a first RAT may transmit (for example, in a system information block) information regarding MB services available via neighbor base stations that operate using a second RAT. In some aspects, the UE may trigger a switch from an MRB to a unicast DRB prior to handover. In some aspects, the UE may transmit, to the source base station prior to handover, an indication of an MB service or a frequency via which the MB service is available via a target base station that operates using the second RAT. In some aspects, the source base station or the target base station may transmit an MRB configuration to the UE to enable the UE to receive the MB service via an MRB of the target base station after handover. In some aspects, the UE may switch from receiving the MB service, from the target base station, via a unicast DRB to the configured MRB after handover.

Particular aspects of the subject matter described in this disclosure can be implemented to realize one or more of the following potential advantages. In some examples, the described techniques can be used to enable MB service continuity when a UE is handed over from a source base station that operates using a first RAT to a target base station that operates using a second RAT. For example, the described techniques can be used to enable the UE to select or prioritize a frequency of the target base station via which the MB service is available, rather than being handed over to a target base station or frequency that does not provide the MB service. As another example, the described techniques may reduce or eliminate packet loss associated with inter-RAT handover by reducing delays in configuring an MRB to be used by the UE to receive an MB service after handover, reducing delays in switching to a unicast DRB for improved reliability prior to handover, or ensuring a switch to the unicast DRB prior to handover, among other examples.

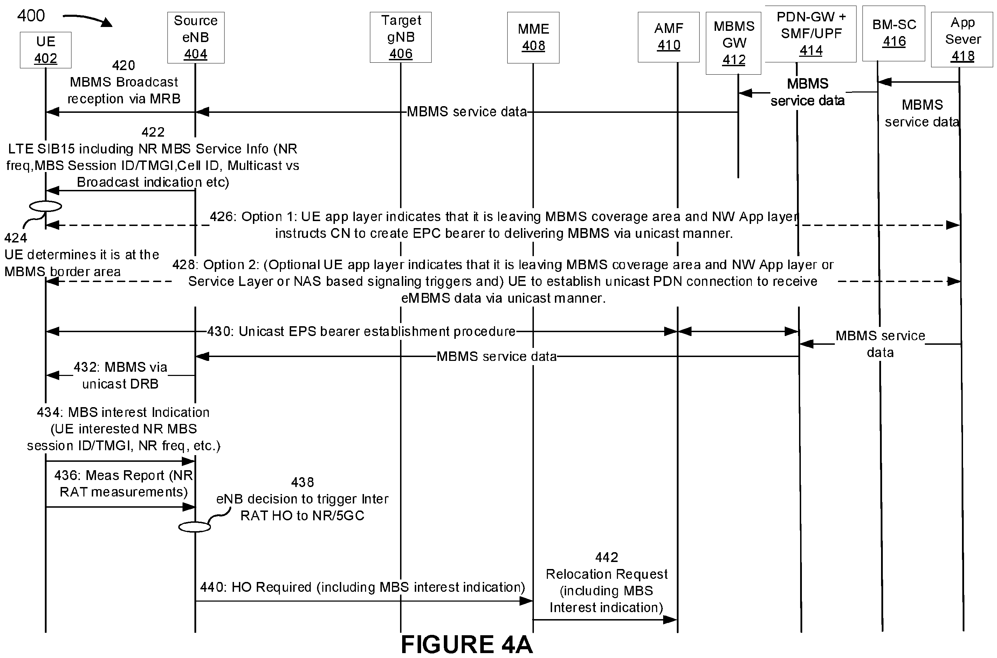

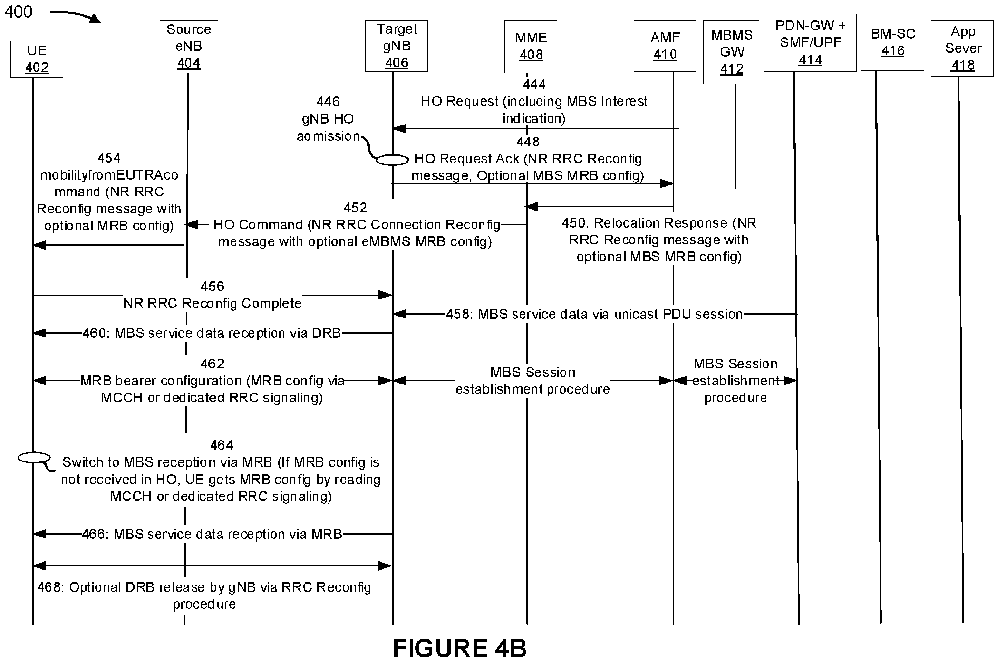

Figures 4A and 4B are diagrams illustrating an example associated with inter-RAT handover with MB service continuity 400 in accordance with the present disclosure. As shown in Figures 4A and 4B, a UE 402, a source eNB 404, a target gNB 406, a mobility management entity (MME) 408, an access and mobility management function (AMF) device 410, an MBMS gateway (GW) 412, a packet data network (PDN) GW 414 (which may include or communicate with a session management function (SMF) or a UPF), a broadcast multicast service center (BM-SC) 416, and an application server 418 may communicate with one another as described herein. The UE 402 may correspond to the UE 110, the source eNB 404 may correspond to a first base station 110, and the target gNB 406 may correspond to a second base station 110. Example 400 is an example of inter-RAT handover with MB service continuity for a handover from an LTE RAT (that uses eMBMS to deliver MB communications) to an NR RAT (that uses NR MBS to deliver MB communications).

As shown in Figure 4A, in a first operation 420, the UE 402 may receive an MB service via a first RAT, which is an LTE RAT in example 400. Using the LTE RAT, the UE 402 may receive the MB service as an MBMS service, shown as an MBMS broadcast. As further shown, the UE 402 may receive the MBMS service via an MRB. Data of the MB service (shown as MB service data) may originate at the application server 418 and may be delivered to the UE 402 via one or more core network devices, such as the BM-SC 416 and the MBMS GW 412, and the source eNB 404. In some aspects, the UE 402 may subscribe to receive the MB service and may receive the MB service (for example, data transmissions of the MB service) based at least in part on subscribing to the MB service.

In a second operation 422, the source eNB 404 may transmit system information (for example, in a SIB, shown as LTE SIB15, but which may be a different SIB in some aspects), and the UE 402 may receive the system information. The system information may be transmitted and received in accordance with the LTE RAT (for example, using one or more protocols, formats, or designs for system information as defined in an LTE communication standard). The system information may include MB service information for a second RAT, which is an NR RAT in example 400. Thus, in example 400, the MB service information may include NR MBS service information. The NR MBS service information may identify a set of frequencies of the NR RAT and one or more MB services available via one or more frequencies of the set of frequencies. For example, the NR MBS service information may identify a set of NR frequencies for one or more neighbor base stations (including, for example, the target gNB 406). The system information may indicate, for each NR frequency included in the system information (or for a subset of the NR frequencies indicated in the system information), the MB service(s) available via that NR frequency. The system information may identify an MB service using, for example, an MBS session identifier (ID), a context ID, a temporary mobile group identity (TMGI), or a combination thereof. Additionally or alternatively, the system information may indicate a cell ID. The cell ID may identify a cell that provides access to an NR frequency included in the system information, may identify a cell via which an MB service is available (for example, via the NR frequency), or a combination thereof. Additionally or alternatively, the system information may indicate, for each MB service indicated in the system information (or for a subset of the MB services indicated in the system information), whether that MB service is a multicast service or a broadcast service. In some aspects, this indication may be a single bit, with a first value of the bit indicating that the MB service is a multicast service, and a second value of the bit indicating that the MB service is a broadcast service.

In a third operation 424, the UE 402 may determine that the UE 402 is at a border of an MBMS service area. For example, the UE 402 may determine that the UE 402 is in a poor coverage area of the source eNB 404 and that a neighbor base station provides stronger coverage. The UE 402 may make this determination based at least in part on reference signals received from the source eNB 404 (for example, cell-specific reference signals (CRSs)) or the neighbor base station(s). For example, the UE 402 may make this determination based at least in part on comparing one or more measured radio channel parameters (for example, an RSRP value, an RSRQ value, an RSSI value, a CQI value, or a SINR value) to a corresponding one or more thresholds. In some aspects, the source eNB 404 may indicate the one or more thresholds or the one or more radio channel parameters to be used to make this determination, such as in a configuration message (for example, an RRC message), a SIB, or a multicast control channel (MCCH) configuration. In some aspects, the UE 402 may determine that the neighbor base stations operate using the NR RAT and thus the UE 402 will leave an MBMS service area in which MB services are provided via the LTE RAT. Based at least in part on this determination, the UE 402 may trigger a switch from a first MRB (an LTE MRB) of the LTE RAT to a first unicast DRB (an LTE unicast DRB) of the LTE RAT. After the switch, the UE 402 may receive the MB service of the LTE RAT (the MBMS service) via the LTE unicast DRB. In some aspects, the UE 402 may trigger the switch using a first option 426 or a second option 428.

Using the first option 426, the UE 402 may trigger the switch from the LTE MRB to the LTE unicast DRB by indicating, to the application server 418 and using an application layer of the UE 402, that the UE 402 is leaving the MBMS coverage area (for example, that the UE 402 is in a poor cell condition in connection with the source eNB 404 or the MBMS coverage area, which may encompass multiple eNBs). The application server 418 may then instruct the LTE core network (for example, one or more devices included in the LTE core network) to establish the unicast LTE bearer (shown as an EPC bearer) to deliver the MBMS service to the UE 402. Using the first option 426, the UE 402 may communicate directly with the application server 418 using, for example, session initiation protocol (SIP) signaling, and core network devices may not receive the content of the message from the UE 402 to the application server 418. Thus, with the first option 426, the UE 402 triggers the switch by notifying the application server 418, and then the application server 418 notifies one or more core network devices (for example, the PDN GW 414) to establish the unicast LTE DRB.

Using the second option 428, the UE 402 may trigger the switch from the LTE MRB to the LTE unicast DRB by directly communicating with a core network device (for example, the PDN GW 414) to cause the unicast LTE DRB to be established. In some aspects, the UE 402 may transmit an indication, to the application server 418, that the UE 402 is leaving the MBMS coverage area, as described above in connection with the first option 426. Based at least in part on this indication, the application server 418 may then instruct the UE 402 to communicate directly with the core network device to trigger the switch. The UE 402 may then transmit a network message, such as a network application layer message, a service layer message, or a network access stratum (NAS) message, to the core network device to trigger the switch. Alternatively, upon detecting that the UE 402 is leaving the MBMS coverage area (for example, that the UE 402 is in a poor MBMS coverage area or a poor cell condition with the source eNB 404), the UE 402 may transit the network message to the core network device to trigger the switch, without first being instructed by the application server 418 to do so. In some aspects, the UE 402 may trigger the switch (using either the first option 426 or the second option 428) based at least in part on comparing one or more measured radio channel parameters (for example, an RSRP value, an RSRQ value, an RSSI value, a CQI value, or a SINR value) to a corresponding one or more thresholds, as described above.

In a fourth operation 430, the UE 402 may receive one or more messages from the core network (for example, the AMF 410 or the PDN GW 414) that establish an LTE unicast DRB for transmission of MB service data. In a fifth operation 432, the UE 402 may receive MB service data (of an LTE MBMS service) via the LTE unicast DRB. As shown, the MB service data may originate at the application server 418 and may be delivered to the UE 402 via one or more core network devices, such as the PDN GW 414, and the source eNB 404. Thus, the LTE MB service may be delivered to the UE 402 by the MBMS GW 412 when the LTE MB service is carried via an LTE MRB, and may be delivered to the UE 402 by the PDN GW 414 when the LTE MB service is carried via an LTE unicast DRB.

In a sixth operation 434, the UE 402 may transmit, to the source eNB 404, an indication that indicates at least one of the MB service, to which the UE 402 is subscribed or is to receive after handover, or an NR frequency via which the MB service is available via the NR RAT. The UE 402 may determine the NR frequency via which the MB service is available based at least in part on the system information described above in connection with the second operation 422. For example, the NR frequency may be included in the one or more frequencies indicated in the system information. For example, the system information may identify the NR frequency and may indicate that the MB service is available via the NR frequency. The UE 402 may identify the MB service, to which the UE 402 is subscribed, in the system information, and may identify an NR frequency indicated in the system information as providing the MB service. The UE 402 may then transmit, to the source eNB 404, an indication of the identified NR frequency, an indication of the MB service, or a combination thereof. As shown, the UE 402 may transmit the indication in an MBS interest indication message. In some aspects, the UE 402 may identify the MB service in the MBS interest indication message using an NR MBS session ID or a TMGI. Thus, in some aspects, the UE 402 may transmit, to the source eNB 404 that operates using the LTE RAT, information that indicates an NR frequency and an MB service identifier used to identify the MB service in the NR RAT. This information may be used in connection with handing over the UE 402 to the target gNB 406 that operates using the NR RAT, as described below.

In some aspects, the UE 402 may identify an NR frequency via which the MB service is available based at least in part on the system information described above in connection with the second operation 422 and based at least in part on a user service description (USD) configured for the UE 402. For example, the UE 402 may be configured with a USD, for an MB service, that maps an NR MBS session ID, used to provide the MB service in the NR RAT, to a TMGI used for the MB service. The TMGI may be used to identify the MB service in both LTE and NR. The UE 402 may receive, in the system information, information indicating a mapping between a TMGI of the MB service and corresponding NR frequencies via which the MB service is available. Thus, the UE 402 may use the USD to map a TMGI, used by the UE 402 to receive an MB service in LTE, to an NR MB session ID used in NR, and the UE 402 may then map the NR MB session ID to a corresponding NR frequency using system information that maps NR MB session IDs to corresponding NR frequencies. Alternatively, the system information may map TMGIs to NR frequencies (instead of or in addition to NR MB session IDs), in which case the UE 402 can map directly from the TMGI to corresponding NR frequencies.

In some aspects, the MBS interest indication message may indicate one or more LTE frequencies, via which the MB service is available, and one or more NR frequencies via which the MB service is available. In some aspects, the UE 402 may indicate an MB service, corresponding to an LTE frequency, using an MBMS service area identity (SAI) or a TMGI. In some aspects, the UE 402 may indicate an MB service, corresponding to an NR frequency, using an MBS session ID or a TMGI. In some aspects, the UE 402 may indicate a service priority for an MB service in the MBS interest indication message. Providing MB service information for both LTE frequencies and NR frequencies allows the source eNB 404 to select a target base station via which the MB service is available regardless of whether the target base station operates using the LTE RAT or the NR RAT.

Although the sixth operation 434 is shown as occurring after the third operation 424 through the fifth operation 432, in some aspects, the sixth operation 434 may occur before the third operation 424. Alternatively, in some aspects, the sixth operation 434 may occur at some point in time between the third operation 424 and the fifth operation 432. Thus, the sixth operation 434 may occur at any time after the second operation 422 and prior to handover to the target gNB 406.

In a seventh operation 436, the UE 402 may transmit one or more measurement reports to the source eNB 404. A measurement report may indicate one or more measured parameters used to perform a handover, such as an RSRP value, an RSRQ value, an RSSI value, a CQI value, or a SINR value, among other examples. In some aspects, a measurement report may include a list of neighbor cells (for example, neighbor frequencies or neighbor base stations) and corresponding measured parameters for those neighbor base stations. In some aspects, the UE 402 may prioritize neighbor cells or neighbor frequencies based at least in part on whether the MB service, to which the UE 402 is subscribed, is available via those neighbor cells or neighbor frequencies. For example, the UE 402 may prioritize cells or frequencies via which the MB service is available, and the UE 402 may deprioritize cells or frequencies via which the MB service is not available. In some aspects, the UE 402 may transmit the one or more measurement reports when the UE is in an RRC connected state. If the UE 402 is in an RRC idle state or an RRC inactive state, then the UE 402 may prioritize neighbor cells or neighbor frequencies in a similar manner as described above when performing a cell reselection procedure.

In an eighth operation 438, the source eNB 404 may determine to trigger inter-RAT handover, for the UE 402, from the source eNB 404 that operates using the LTE RAT to the target gNB 406 that operates using the NR RAT. In some aspects, the source eNB 404 may make this determination based at least in part on one or more measurement reports received from the UE 402, as described above. If the UE 402 prioritizes cells or frequencies in a measurement report according to whether those cells or frequencies provide the MB service, then the source eNB 404 may use that prioritized list of cells or frequencies to identify the target gNB 406 that is the target of the handover. Additionally or alternatively, the source eNB 404 may use the MBS interest indication, received from the UE 402, to identify the MB service to which the UE 402 is subscribed. The source eNB 404 may then determine which neighbor cells or frequencies provide the MB service, and the source eNB 404 may select the target gNB 406 based at least in part on a determination that the MB service is available via the target gNB 406.

In a ninth operation 440, the source eNB 404 may transmit a handover message (shown as "HO Required") to the MME 408. As shown, the handover message may include the MBS interest indication to signal, to the target gNB 406 via the MME 408 and the AMF 410, the MB service(s) to which the UE 402 is subscribed. In a tenth operation 442, the MME 408 may transmit a relocation request message to the AMF 410. As shown, the relocation request message may include the MBS interest indication.

As shown in Figure 4B, in an eleventh operation 444, the AMF 410 may transmit a handover (HO) request to the target gNB 406. As shown, the handover request may include the MBS interest indication. In a twelfth operation 446, the target gNB 406 may perform handover admission. In a thirteenth operation 448, the target gNB 406 may transmit a handover request acknowledgement (ACK) to the AMF 410. As shown, the handover request ACK may include an NR RRC reconfiguration message to be delivered to the UE 402. In some aspects, the handover request ACK may include an MRB configuration to configure an NR MRB for the UE 402 (shown as an MBS MRB configuration). For example, the MRB configuration may be included in the NR RRC reconfiguration message. The UE 402 may use the MRB configuration to configure an NR MRB to be used to receive the MB service via the target gNB 406 and via the NR RAT.

In a fourteenth operation 450, the AMF 410 may transmit a relocation response message to the MME 408. As shown, the relocation response message may include the NR RRC reconfiguration message, which may include the MRB configuration. In a fifteenth operation 452, the MME 408 may transmit a handover command to the source eNB 404. As shown, the handover command may include the NR RRC reconfiguration message, which may include the MRB configuration. In a sixteenth operation 454, the source eNB 404 may transmit a mobility message to the UE 402. For example, the mobility message may be a *mobilityfromEUTRAcommand* message. As shown, the mobility message may include the NR RRC reconfiguration message, which may include the MRB configuration. In a seventeenth operation 456, the UE 402 may transmit, to the target gNB 406, an NR RRC reconfiguration complete message to acknowledge receipt of the NR RRC reconfiguration message and to complete handover to the target gNB 406.

In an eighteenth operation 458, after handover to the target gNB 406, the PDN GW 414 may transmit MBS service data (for example, originating at the application server 418) to the target gNB 406 for delivery to the UE 402. As shown, the PDN GW 414 may transmit the MBS service data using a unicast PDU session that is associated with an NR unicast DRB. In a nineteenth operation 460, the target gNB 406 may transmit the MBS service data to the UE 402 via the NR unicast DRB after handover to the target gNB 406 is complete. For example, the target gNB 406 may use the NR unicast DRB to deliver the MBS service data to the UE 402 before an NR MRB is configured to deliver the MBS service data to the UE 402.

In a twentieth operation 462, the UE 402 and the target gNB 406 may communicate to establish an NR MRB for delivery of the MBS service data. In some aspects, if the NR RRC reconfiguration message described above includes the MRB configuration, then the UE 402 and the target gNB 406 may use this MRB configuration to establish the NR MRB. Alternatively, if the NR RRC reconfiguration message described above does not include the MRB configuration, then the UE 402 may obtain the MRB configuration via a multicast control channel (MCCH) message, transmitted by the target gNB 406, or via a separate RRC message received from the target gNB 406. As further shown, the target gNB 406 may communicate with the AMF 410, and the AMF 410 may communicate with the PDN GW 414, to establish an MBS session for delivery of MB services to the UE 402 via an MRB.

In a twenty-first operation 464, the UE 402 may switch from the NR unicast DRB to the NR MRB after the NR MRB is configured. In a twenty-second operation 466, the target gNB 406 may transmit MBS service data to the UE 402 via the NR MRB, rather than via the NR unicast DRB. In a twenty-third operation 468, the target gNB 406 may release the NR unicast DRB for the UE 402, such as by using an RRC reconfiguration message.

Using one or more operations described in connection with Figures 4A and 4B, MB service continuity may be maintained for the UE 402 when the UE 402 is handed over from a source eNB 404, that operates using an LTE RAT, to a target gNB 406 that operates using an NR RAT. For example, the described operations can be used to enable the UE 402 to select or prioritize a frequency of the target gNB 406 via which the MB service is available, rather than being handed over to a target base station or frequency that does not provide the MB service. As another example, the described techniques may reduce or eliminate packet loss associated with inter-RAT handover by reducing delays in configuring an NR MRB to be used by the UE to receive an MB service after handover, reducing delays in switching to an LTE unicast DRB for improved reliability prior to handover, or ensuring a switch to the LTE unicast DRB prior to handover, among other examples.

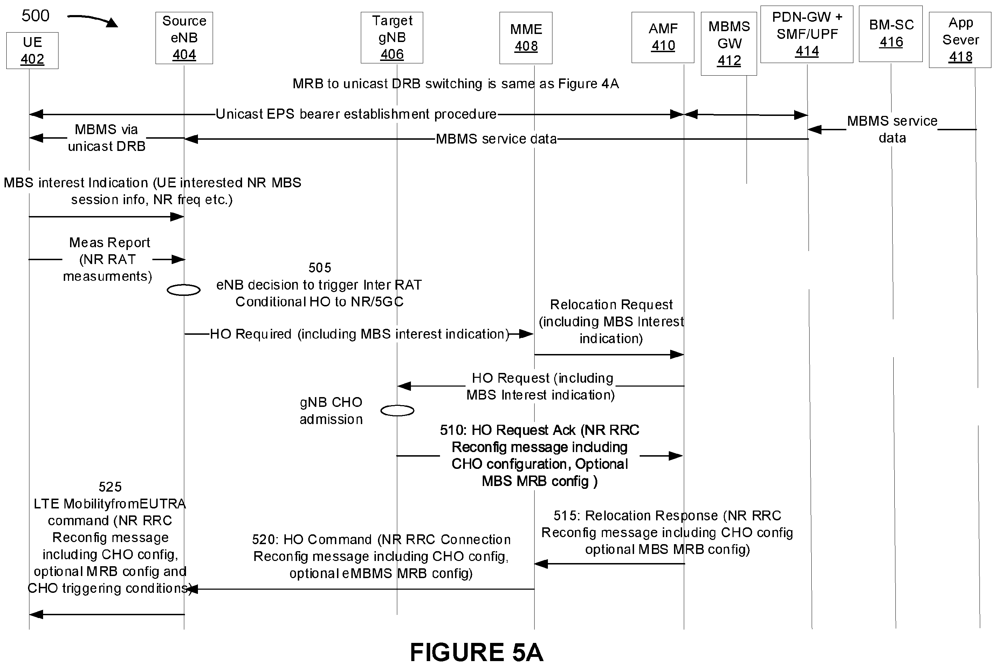

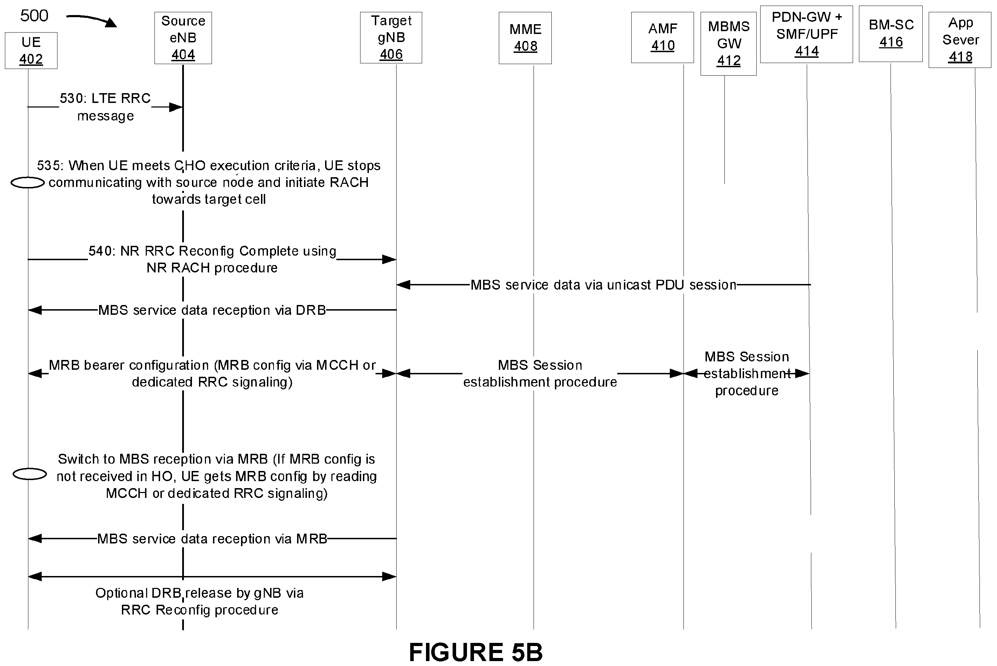

Figures 5A and 5B are diagrams illustrating an example associated with inter-RAT handover with MB service continuity 500 in accordance with the present disclosure. As shown in Figures 5A and 5B, the devices described above in connection with Figures 4A an 4B may communicate with one another as described herein. Example 500 is an example of inter-RAT conditional handover (CHO) with MB service continuity for a conditional handover from an LTE RAT (that uses eMBMS to deliver MB communications) to an NR RAT (that uses NR MBS to deliver MB communications). The operations shown in Figures 5A and 5B are mostly the same as those shown in Figures 4A and 4B, except that Figures 5A and 5B are for conditional handover as opposed to normal handover. The differences for inter-RAT conditional handover with MB service continuity, as compared to the inter-RAT handover with MB service continuity described above in connection with Figures 4A and 4B, are described below.

In an operation 505 (similar to the operation 438 of Figure 4A), the source eNB 404 may determine to trigger inter-RAT conditional handover, for the UE 402, from the source eNB 404 that operates using the LTE RAT to the target gNB 406 that operates using the NR RAT.

In an operation 510 (similar to the operation 448 of Figure 4B), the target gNB 406 may transmit a handover request acknowledgement (ACK) to the AMF 410. As shown, the handover request ACK may include a CHO configuration, which may indicate one or more CHO triggering conditions or CHO execution criteria that, when satisfied, cause the UE 402 to perform a handover by initiating a RACH procedure with the target gNB 406. In some aspects, the CHO configuration may be included in the NR RRC reconfiguration message.

In an operation 515 (similar to the operation 450 of Figure 4B), the AMF 410 may transmit a relocation response message to the MME 408. As shown, the relocation response message may include the NR RRC reconfiguration message, which may include the CHO configuration. In an operation 520 (similar to the operation 452 of Figure 4B), the MME 408 may transmit a handover command to the source eNB 404. As shown, the handover command may include the NR RRC reconfiguration message, which may include the CHO configuration. In an operation 525 (similar to the operation 454 of Figure 4B), the source eNB 404 may transmit a mobility message to the UE 402. For example, the mobility message may be an LTE *mobilityfromEUTRAcommand* message. As shown, the mobility message may include the NR RRC reconfiguration message, which may include the CHO configuration (and one or more CHO triggering conditions).

In an operation 530, the UE 402 may transmit, to the source eNB 404, an LTE RRC message to acknowledge receipt of the LTE *mobilityfromEUTRAcommand.* In an operation 535, the UE 402 may determine that one or more CHO triggering conditions or execution criteria are satisfied and may trigger handover to the target gNB 406. For example, the UE 402 may stop communicating with the source eNB 404 and may perform a RACH procedure to connect to the target gNB 406. In an operation 540, the UE 402 may transmit, to the target gNB 406, an NR RRC reconfiguration complete message to complete handover.

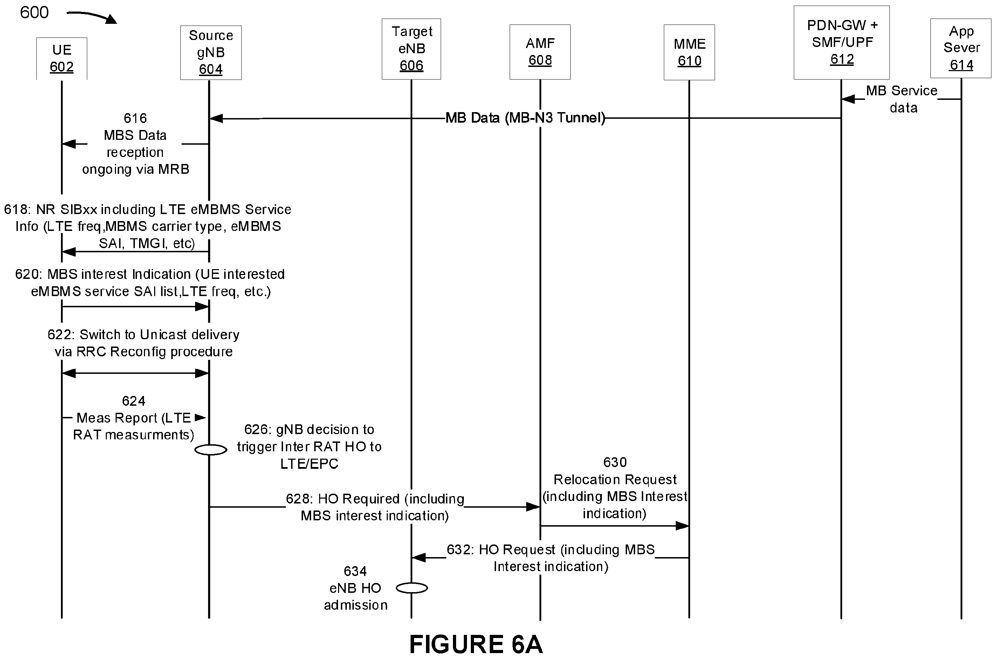

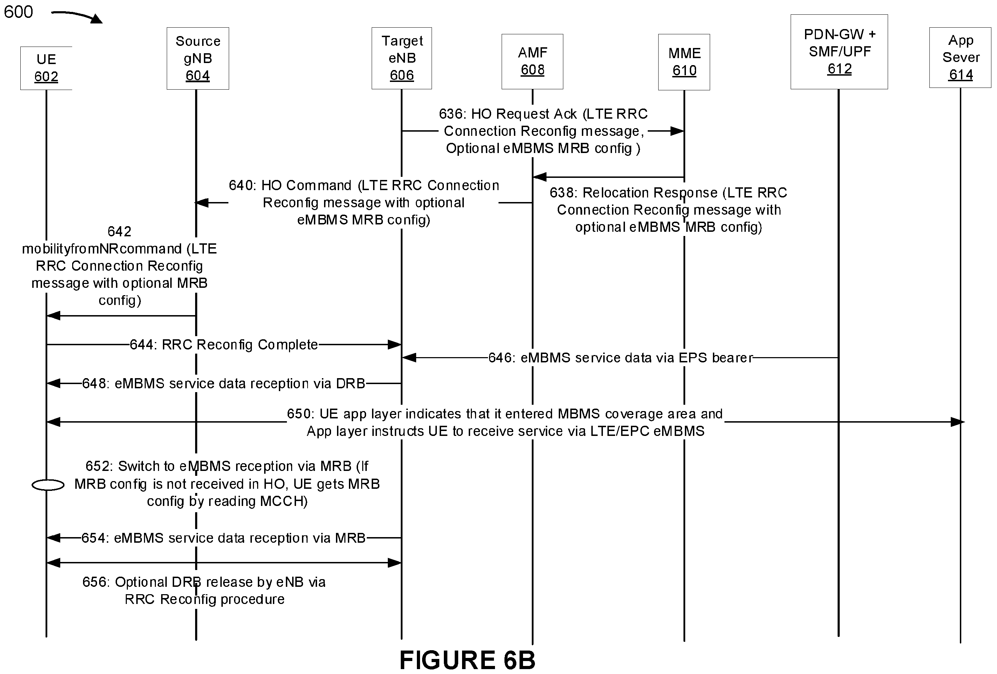

Figures 6A and 6B are diagrams illustrating an example associated with inter-RAT handover with MB service continuity 600 in accordance with the present disclosure. As shown in Figures 6A and 6B, a UE 602, a source gNB 604, a target eNB 606, an AMF device 608, an MME 610, a PDN GW 612 (which may include or communicate with an SMF or a UPF), and an application server 614 may communicate with one another as described herein. The UE 602 may correspond to the UE 110, the source gNB 604 may correspond to a first base station 110, and the target eNB 606 may correspond to a second base station 110. Example 600 is an example of inter-RAT handover with MB service continuity for a handover from an NR RAT (for example, that uses NR MBS to deliver MB communications) to an LTE RAT (for example, that uses eMBMS to deliver MB communications).

As shown in Figure 6A, in a first operation 616, the UE 602 may receive an MB service (for example, MBS data or MB service data) via a first RAT, which is an NR RAT in example 600. Using the NR RAT, the UE 602 may receive the MB service as an NR MBS. As further shown, the UE 602 may receive the MB service via an MRB. Data of the MB service (shown as MB service data) may originate at the application server 614 and may be delivered to the UE 602 via one or more core network devices, such as the PDN GW 612, and the source gNB 604. In some aspects, the UE 602 may subscribe to receive the MB service and may receive the MB service (for example, data transmissions of the MB service) based at least in part on subscribing to the MB service.

In a second operation 618, the source gNB 604 may transmit system information (for example, in a SIB, shown as NR SIBxx), and the UE 602 may receive the system information. The system information may be transmitted and received in accordance with the NR RAT (for example, using one or more protocols, formats, or designs for system information as defined in an NR communication standard). The system information may include MB service information for a second RAT, which is an LTE RAT in example 600. Thus, in example 600, the MB service information may include LTE eMBMS service information. The LTE eMBMS service information may identify a set of frequencies of the LTE RAT and one or more MB services available via one or more frequencies of the set of frequencies. For example, the LTE eMBMS service information may identify a set of LTE frequencies for one or more neighbor base stations (including, for example, the target eNB 606). The system information may indicate, for each LTE frequency included in the system information (or for a subset of the LTE frequencies indicated in the system information), the MB service(s) available via that LTE frequency. The system information may identify an MB service using, for example, an eMBMS SAI, a TMGI, or a combination thereof. Additionally or alternatively, the system information may indicate a cell ID. The cell ID may identify a cell that provides access to an LTE frequency included in the system information, may identify a cell via which an MB service is available (for example, via the LTE frequency), or a combination thereof. Additionally or alternatively, the system information may indicate, for each MB service indicated in the system information (or for a subset of the MB services indicated in the system information), an eMBMS carrier type associated with that MB service. An eMBMS carrier type may include, for example, a pre-Release-14 MBMS carrier *(mbms),* an FeMBMS/Unicast mixed carrier *(fembmsMixed),* or an MBMS-dedicated carrier *(fembmsDedicated).*

In a third operation 620, the UE 602 may transmit, to the source gNB 604, an indication that indicates at least one of the MB service, to which the UE 602 is subscribed or is to receive after handover, or an LTE frequency via which the MB service is available via the LTE RAT. The UE 602 may determine the LTE frequency via which the MB service is available based at least in part on the system information described above in connection with the second operation 618. For example, the LTE frequency may be included in the one or more frequencies indicated in the system information. For example, the system information may identify the LTE frequency and may indicate that the MB service is available via the LTE frequency. The UE 602 may identify the MB service, to which the UE 602 is subscribed, in the system information, and may identify an LTE frequency indicated in the system information as providing the MB service. The UE 602 may then transmit, to the source gNB 604, an indication of the identified LTE frequency, an indication of the MB service, or a combination thereof. As shown, the UE 602 may transmit the indication in an MBS interest indication message. In some aspects, the UE 602 may identify the MB service in the MBS interest indication message using an MBMS SAI or a TMGI. Thus, in some aspects, the UE 602 may transmit, to the source gNB 604 that operates using the NR RAT, information that indicates an LTE frequency and an MB service identifier used to identify the MB service in the LTE RAT. This information may be used in connection with handing over the UE 602 to the target eNB 606 that operates using the LTE RAT, as described below.

In some aspects, the UE 602 may identify an LTE frequency via which the MB service is available based at least in part on the system information described above in connection with the second operation 618 and based at least in part on a USD configured for the UE 602. For example, the UE 602 may be configured with a USD, for an MB service, that maps an LTE MBMS SAI (or eMBMS SAI), used to provide the MB service in the LTE RAT, to a TMGI used for the MB service. The TMGI may be used to identify the MB service in both LTE and NR. The UE 602 may receive, in the system information, information indicating a mapping between a TMGI of the MB service and corresponding LTE frequencies via which the MB service is available. Thus, the UE 602 may use the USD to map a TMGI, used by the UE 602 to receive an MB service in NR, to an MBMS SAI used in LTE, and may then map the MBMS SAI to a corresponding LTE frequency using system information that maps MBMS SAIs to corresponding LTE frequencies. Alternatively, the system information may map TMGIs to LTE frequencies (instead of or in addition to LTE MBMS SAIs), in which case the UE 602 can map directly from the TMGI to corresponding LTE frequencies.

In some aspects, the MBS interest indication message may indicate one or more LTE frequencies, via which the MB service is available, and one or more NR frequencies via which the MB service is available. In some aspects, the UE 602 may indicate an MB service, corresponding to an LTE frequency, using an MBMS SAI or a TMGI. In some aspects, the UE 602 may indicate an MB service, corresponding to an NR frequency, using an MBS session ID or a TMGI. In some aspects, the UE 602 may indicate a service priority for an MB service in the MBS interest indication message. Providing MB service information for both LTE frequencies and NR frequencies allows the source gNB 604 to select a target base station via which the MB service is available regardless of whether the target base station operates using the LTE RAT or the NR RAT.

In a fourth operation 622, the source gNB 604 may trigger the UE 602 to switch from a first MRB (an NR MRB) of the NR RAT to a first unicast DRB (an NR unicast DRB) of the NR RAT. After the switch, the UE 602 may receive the MB service of the NR RAT via the NR unicast DRB. In some aspects, the source gNB 604 may trigger the UE 602 to switch based at least in part on determining that the UE 602 is in a poor coverage area of the source gNB 604 and that a neighbor base station provides stronger coverage. The source gNB 604 may make this determination based at least in part on one or more measurement reports provided by the UE 602 or channel state information feedback received from the UE 602, among other examples. For example, the UE 602 may send a measurement report to assist the source gNB 604 with determining to switch from an NR MRB to an NR unicast DRB. In some aspects, the UE 602 may trigger a measurement report (to then trigger the gNB 604 to switch bearers) based at least in part on comparing one or more measured radio channel parameters (for example, an RSRP value, an RSRQ value, an RSSI value, a CQI value, or a SINR value) to a corresponding one or more thresholds. In some aspects, the source gNB 604 may indicate the one or more thresholds or the one or more radio channel parameters to be used to make this determination, such as in a configuration message (for example, an RRC message), a SIB, or an MCCH configuration. In some aspects, the UE 602 may determine that the neighbor base stations operate using the LTE RAT and thus the UE 602 will leave an MB service area in which MB services are provided via the NR RAT. In some aspects, the UE 602 and the source gNB 604 may perform an RRC reconfiguration procedure to switch from using the NR MRB to the NR unicast DRB for delivery of the MB service. After the switch, the UE 602 may receive MB service data (of an NR MB service) via the NR unicast DRB. Although the third operation 620 is shown as occurring before the fourth operation 622, in some aspects, the third operation 620 may occur after the fourth operation 622.

In a fifth operation 624, the UE 602 may transmit one or more measurement reports to the source gNB 604. A measurement report may indicate one or more measured parameters used to perform a handover, such as an RSRP value, an RSRQ value, an RSSI value, a CQI value, or a SINR value, among other examples. In some aspects, a measurement report may include a list of neighbor cells (for example, neighbor frequencies or neighbor base stations) and corresponding measured parameters for those neighbor base stations. In some aspects, the UE 602 may prioritize neighbor cells or neighbor frequencies based at least in part on whether the MB service, to which the UE 602 is subscribed, is available via those neighbor cells or neighbor frequencies. For example, the UE 602 may prioritize cells or frequencies via which the MB service is available, and the UE 602 may deprioritize cells or frequencies via which the MB service is not available. In some aspects, the UE 602 may transmit the one or more measurement reports when the UE is in an RRC connected state. If the UE 602 is in an RRC idle state or an RRC inactive state, then the UE 602 may prioritize neighbor cells or neighbor frequencies in a similar manner as described above when performing a cell reselection procedure.

In a sixth operation 626, the source gNB 604 may determine to trigger inter-RAT handover, for the UE 602, from the source gNB 604 that operates using the NR RAT to the target eNB 606 that operates using the LTE RAT. In some aspects, the source gNB 604 may make this determination based at least in part on one or more measurement reports received from the UE 602, as described above. If the UE 602 prioritizes cells or frequencies in a measurement report according to whether those cells or frequencies provide the MB service, then the source gNB 604 may use that prioritized list of cells or frequencies to identify the target eNB 606 that is the target of the handover. Additionally or alternatively, the source gNB 604 may use the MBS interest indication, received from the UE 602, to identify the MB service to which the UE 602 is subscribed. The source gNB 604 may then determine which neighbor cells or frequencies provide the MB service, and may select the target eNB 606 based at least in part on a determination that the MB service is available via the target eNB 606.

In a seventh operation 628, the source gNB 604 may transmit a handover message (shown as "HO Required") to the AMF 608. As shown, the handover message may include the MBS interest indication to signal, to the target eNB 606 via the AMF 608 and the MME 610, the MB service(s) to which the UE 602 is subscribed. In an eighth operation 630, the AMF 608 may transmit a relocation request message to the MME 610. As shown, the relocation request message may include the MBS interest indication. In a ninth operation 632, the MME 610 may transmit a handover (HO) request to the target eNB 606. As shown, the handover request may include the MBS interest indication. In a tenth operation 634, the target eNB 606 may perform handover admission.

As shown in Figure 6B, in an eleventh operation 636, the target eNB 606 may transmit a handover request ACK to the MME 610. As shown, the handover request ACK may include an LTE RRC reconfiguration message to be delivered to the UE 602. In some aspects, the handover request ACK may include an MRB configuration to configure an LTE MRB for the UE 602 (shown as an eMBMS MRB configuration). For example, the MRB configuration may be included in the LTE RRC reconfiguration message. The UE 602 may use the MRB configuration to configure an LTE MRB to be used to receive the MB service via the target eNB 606 and via the LTE RAT.

In a twelfth operation 638, the MME 610 may transmit a relocation response message to the AMF 608. As shown, the relocation response message may include the LTE RRC reconfiguration message, which may include the MRB configuration. In a thirteenth operation 640, the AMF 608 may transmit a handover command to the source gNB 604. As shown, the handover command may include the LTE RRC reconfiguration message, which may include the MRB configuration. In a fourteenth operation 642, the source gNB 604 may transmit a mobility message to the UE 602. For example, the mobility message may be a *mobilityfromNRcommand* message. As shown, the mobility message may include the LTE RRC reconfiguration message, which may include the MRB configuration. In a fifteenth operation 644, the UE 602 may transmit, to the target eNB 606, an LTE RRC reconfiguration complete message to acknowledge receipt of the LTE RRC reconfiguration message and to complete handover to the target eNB 606.

In a sixteenth operation 646, after handover to the target eNB 606, the PDN GW 612 may transmit eMBMS service data (for example, originating at the application server 614) to the target eNB 606 for delivery to the UE 602. As shown, the PDN GW 614 may transmit the eMBMS service data using an LTE unicast DRB, shown as an EPS bearer. In a seventeenth operation 648, the target eNB 606 may transmit the eMBMS service data to the UE 602 via the LTE unicast DRB after handover to the target eNB 606 is complete. For example, the target eNB 606 may use the LTE unicast DRB to deliver the eMBMS service data to the UE 602 before an LTE MRB is configured to deliver the eMBMS service data to the UE 602.

In an eighteenth operation 650, the UE 602 may indicate, to the application server 614 and using an application layer of the UE 602, that the UE 602 is entering an MBMS coverage area. The application server 614 may then instruct the UE 602 to receive the eMBMS service using LTE/EPC eMBMS, such as via an LTE MRB. In some aspects, the application server 614 may instruct the LTE core network (for example, one or more devices included in the LTE core network) to establish the LTE MRB to deliver the MBMS service to the UE 602.

In a nineteenth operation 652, the UE 602 may switch from the LTE unicast DRB to the LTE MRB. In some aspects, the UE 602 and the target eNB 606 may communicate to establish an LTE MRB for delivery of the eMBMS service data. In some aspects, if the LTE RRC reconfiguration message described above includes the MRB configuration, then the UE 602 and the target eNB 606 may use this MRB configuration to establish the LTE MRB. Alternatively, if the LTE RRC reconfiguration message described above does not include the MRB configuration, then the UE 602 may obtain the MRB configuration via an MCCH message, transmitted by the target eNB 606.

In a twentieth operation 654, the target eNB 606 may transmit eMBMS service data to the UE 602 via the LTE MRB, rather than via the LTE unicast DRB. In a twenty-first operation 656, the target eNB 606 may release the LTE unicast DRB for the UE 602, such as by using an RRC reconfiguration message. In some aspects, the operations of Figures 6A and 6B may be modified for conditional handover from NR to LTE, in a similar manner as described above in connection with Figures 5A and 5B.

Using one or more operations described in connection with Figures 6A and 6B, MB service continuity may be maintained for the UE 602 when the UE 602 is handed over from a source gNB 604, that operates using an NR RAT, to a target eNB 606 that operates using an LTE RAT. For example, the described operations can be used to enable the UE 602 to select or prioritize a frequency of the target eNB 606 via which the MB service is available, rather than being handed over to a target base station or frequency that does not provide the MB service. As another example, the described techniques may reduce or eliminate packet loss associated with inter-RAT handover by reducing delays in configuring an LTE MRB to be used by the UE to receive an MB service after handover, reducing delays in switching to an NR unicast DRB for improved reliability prior to handover, or ensuring a switch to the NR unicast DRB prior to handover, among other examples.

Figure 7 is a flowchart illustrating an example process 700 performed, for example, by a UE in accordance with the present disclosure. Example process 700 is an example where the UE (for example, UE 120, UE 402, or UE 602) performs operations associated with inter-RAT handover with MB service continuity.

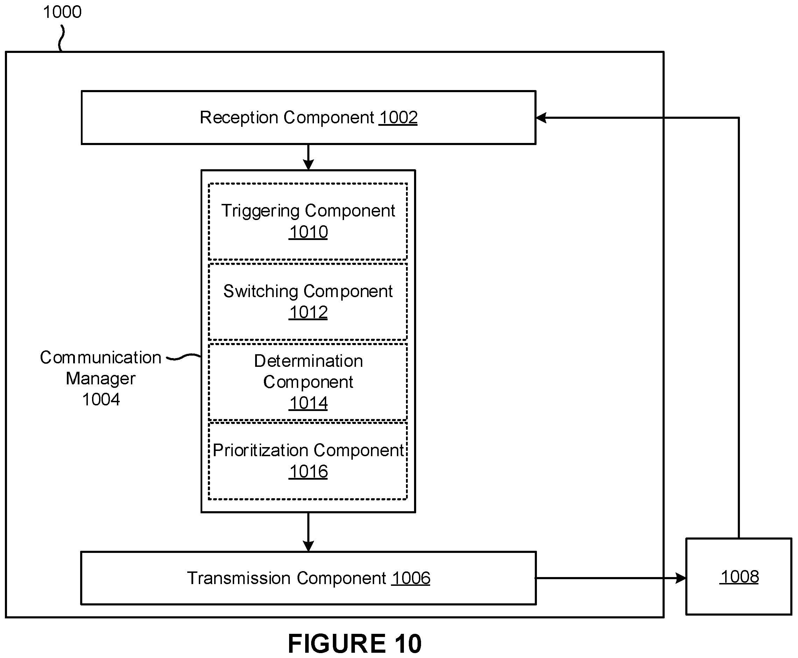

As shown in Figure 7, in some aspects, process 700 may include receiving, via a first RAT associated with a source base station, system information that identifies a set of frequencies of a second RAT and one or more MB services available via one or more frequencies of the set of frequencies (block 710). For example, the UE (such as by using reception component 1002, depicted in Figure 10) may receive, via a first RAT associated with a source base station, system information that identifies a set of frequencies of a second RAT and one or more MB services available via one or more frequencies of the set of frequencies, as described above.

As further shown in Figure 7, in some aspects, process 700 may include communicating, with the source base station or a core network device, to trigger a switch from a first MRB, of the first RAT, to a first unicast DRB, of the first RAT, for reception of an MB service, of the one or more MB services, via the first RAT (block 720). For example, the UE (such as by using reception component 1002, transmission component 1006, or triggering component 1010, depicted in Figure 10) may communicate, with the source base station or a core network device, to trigger a switch from a first MRB, of the first RAT, to a first unicast DRB, of the first RAT, for reception of an MB service, of the one or more MB services, via the first RAT, as described above.

As further shown in Figure 7, in some aspects, process 700 may include transmitting, to the source base station, an indication that indicates at least one of the MB service or a frequency, of the one or more frequencies, via which the MB service is available via the second RAT (block 730). For example, the UE (such as by using transmission component 1006, depicted in Figure 10) may transmit, to the source base station, an indication that indicates at least one of the MB service or a frequency, of the one or more frequencies, via which the MB service is available via the second RAT, as described above.

As further shown in Figure 7, in some aspects, process 700 may include receiving, from the source base station or a target base station, an MRB configuration associated with receiving the MB service via the target base station using the second RAT (block 740). For example, the UE (such as by using reception component 1002, depicted in Figure 10) may receive, from the source base station or a target base station, an MRB configuration associated with receiving the MB service via the target base station using the second RAT, as described above.

As further shown in Figure 7, in some aspects, process 700 may include communicating, with the target base station, based at least in part on switching from a second unicast DRB, of the second RAT, to a second MRB, of the second RAT, after handover from the source base station to the target base station and based at least in part on the MRB configuration (block 750). For example, the UE (such as by using reception component 1002, transmission component 1006, or switching component 1012, depicted in Figure 10) may communicate, with the target base station, based at least in part on switching from a second unicast DRB, of the second RAT, to a second MRB, of the second RAT, after handover from the source base station to the target base station and based at least in part on the MRB configuration, as described above.

Process 700 may include additional aspects, such as any single aspect or any combination of aspects described below or in connection with one or more other processes described elsewhere herein.

In a first additional aspect, the system information further indicates at least one of one or more cells via which the one or more MB services are available, whether the MB service is a multicast service or a broadcast service, or a carrier type associated with the MB service.

In a second additional aspect, alone or in combination with the first aspect, process 700 includes receiving a configuration that indicates a mapping between at least one of an MB session identifier, that identifies the MB service in the second RAT, and a TMGI that identifies the MB service in both the first RAT and the second RAT, or an MBMS SAI, that identifies the MB service in the first RAT, and the TMGI that identifies the MB service in both the first RAT and the second RAT.

In a third additional aspect, alone or in combination with one or more of the first and second aspects, transmitting the indication comprises transmitting an MB service interest indication that indicates the MB service and a frequency, of the set of frequencies, via which the MB service is available.

In a fourth additional aspect, alone or in combination with one or more of the first through third aspects, process 700 includes determining the frequency, of the set of frequencies, via which the MB service is available, and transmitting the MB service interest indication comprises transmitting the MB service interest indication based at least in part on determining the frequency, of the set of frequencies, via which the MB service is available.

In a fifth additional aspect, alone or in combination with one or more of the first through fourth aspects, the MB service interest indication indicates one or more first frequencies, of the first RAT, via which the MB service is available, and also indicates one or more second frequencies, of the second RAT, via which the MB service is available, wherein the one or more second frequencies are included in the set of frequencies of the second RAT.

In a sixth additional aspect, alone or in combination with one or more of the first through fifth aspects, process 700 includes prioritizing one or more frequencies of the second RAT for cell reselection based at least in part on corresponding availability of the MB service on each of the one or more frequencies.

In a seventh additional aspect, alone or in combination with one or more of the first through sixth aspects, the handover is a conditional handover.

In an eighth additional aspect, alone or in combination with one or more of the first through seventh aspects, communicating to trigger the switch from the first MRB to the first unicast DRB comprises transmitting a signal to trigger the switch based at least in part on comparing one or more radio channel parameters to one or more thresholds.

In a ninth additional aspect, alone or in combination with one or more of the first through eighth aspects, process 700 includes receiving a configuration that indicates the one or more thresholds.

Although Figure 7 shows example blocks of process 700, in some aspects, process 700 may include additional blocks, fewer blocks, different blocks, or differently arranged blocks than those depicted in Figure 7. Additionally or alternatively, two or more of the blocks of process 700 may be performed in parallel.

Figure 8 is a flowchart illustrating an example process 800 performed, for example, by a source base station in accordance with the present disclosure. Example process 800 is an example where the source base station (for example, base station 110, source eNB 404, or source gNB 604) performs operations associated with inter-RAT handover with MB service continuity.

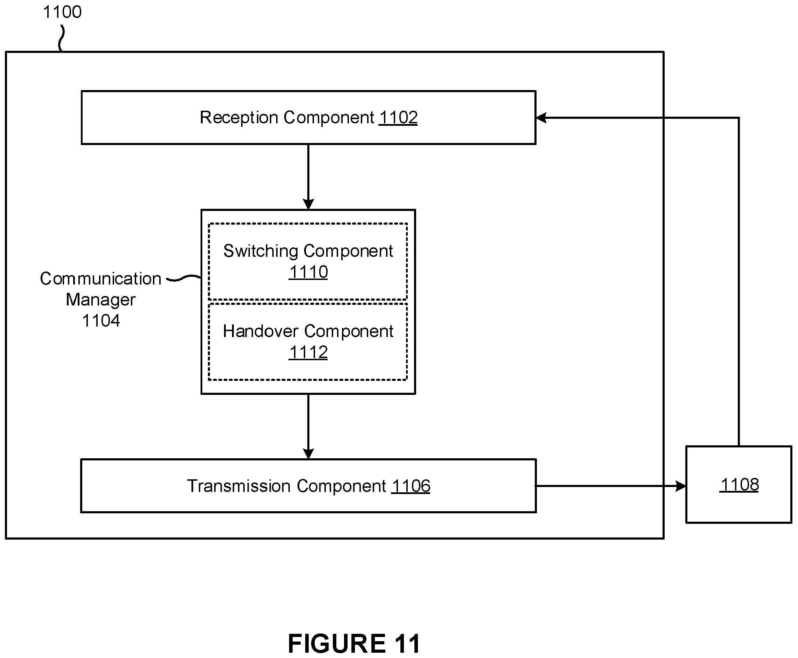

As shown in Figure 8, in some aspects, process 800 may include transmitting, via a first RAT, system information that identifies a set of frequencies of a second RAT and one or more MB services available via one or more frequencies of the set of frequencies (block 810). For example, the source base station (such as by using transmission component 1106, depicted in Figure 11) may transmit, via a first RAT, system information that identifies a set of frequencies of a second RAT and one or more MB services available via one or more frequencies of the set of frequencies, as described above.

As further shown in Figure 8, in some aspects, process 800 may include communicating, with a UE, to switch from a first MRB, of the first RAT, to a first unicast DRB, of the first RAT, for transmission of an MB service, of the one or more MB services, to the UE via the first RAT (block 820). For example, the source base station (such as by using reception component 1102, transmission component 1106, or switching component 1110, depicted in Figure 11) may communicate, with a UE, to switch from a first MRB, of the first RAT, to a first unicast DRB, of the first RAT, for transmission of an MB service, of the one or more MB services, to the UE via the first RAT, as described above.

As further shown in Figure 8, in some aspects, process 800 may include receiving, from the UE, an indication that indicates at least one of the MB service or a frequency, of the one or more frequencies, via which the MB service is available via the second RAT (block 830). For example, the source base station (such as by using reception component 1102, depicted in Figure 11) may receive, from the UE, an indication that indicates at least one of the MB service or a frequency, of the one or more frequencies, via which the MB service is available via the second RAT, as described above.

As further shown in Figure 8, in some aspects, process 800 may include performing a handover to a target base station based at least in part on the indication (block 840). For example, the source base station (such as by using handover component 1112, depicted in Figure 11) may perform a handover to a target base station based at least in part on the indication, as described above.

Process 800 may include additional aspects, such as any single aspect or any combination of aspects described below or in connection with one or more other processes described elsewhere herein.

In a first additional aspect, the system information further indicates at least one of one or more cells via which the one or more MB services are available, whether the MB service is a multicast service or a broadcast service, or a carrier type associated with the MB service.

In a second additional aspect, alone or in combination with the first aspect, process 800 includes transmitting a configuration that indicates a mapping between at least one of an MB session identifier, that identifies the MB service in the second RAT, and a TMGI that identifies the MB service in both the first RAT and the second RAT, or an MBMS SAI, that identifies the MB service in the first RAT, and the TMGI that identifies the MB service in both the first RAT and the second RAT.

In a third additional aspect, alone or in combination with one or more of the first and second aspects, receiving the indication comprises receiving an MB service interest indication that indicates the MB service and a frequency, of the set of frequencies, via which the MB service is available.

In a fourth additional aspect, alone or in combination with one or more of the first through third aspects, the MB service interest indication indicates one or more first frequencies, of the first RAT, via which the MB service is available, and also indicates one or more second frequencies, of the second RAT, via which the MB service is available, wherein the one or more second frequencies are included in the set of frequencies of the second RAT.

In a fifth additional aspect, alone or in combination with one or more of the first through fourth aspects, the handover is a conditional handover.

In a sixth additional aspect, alone or in combination with one or more of the first through fifth aspects, process 800 includes transmitting a configuration that indicates one or more radio channel parameter thresholds to be used to trigger a switch from the first MRB to the first unicast DRB.

Although Figure 8 shows example blocks of process 800, in some aspects, process 800 may include additional blocks, fewer blocks, different blocks, or differently arranged blocks than those depicted in Figure 8. Additionally or alternatively, two or more of the blocks of process 800 may be performed in parallel.

Figure 9 is a flowchart illustrating an example process 900 performed, for example, by a target base station in accordance with the present disclosure. Example process 900 is an example where the target base station (for example, base station 110, target gNB 406, or target eNB 606) performs operations associated with inter-RAT handover with MB service continuity.

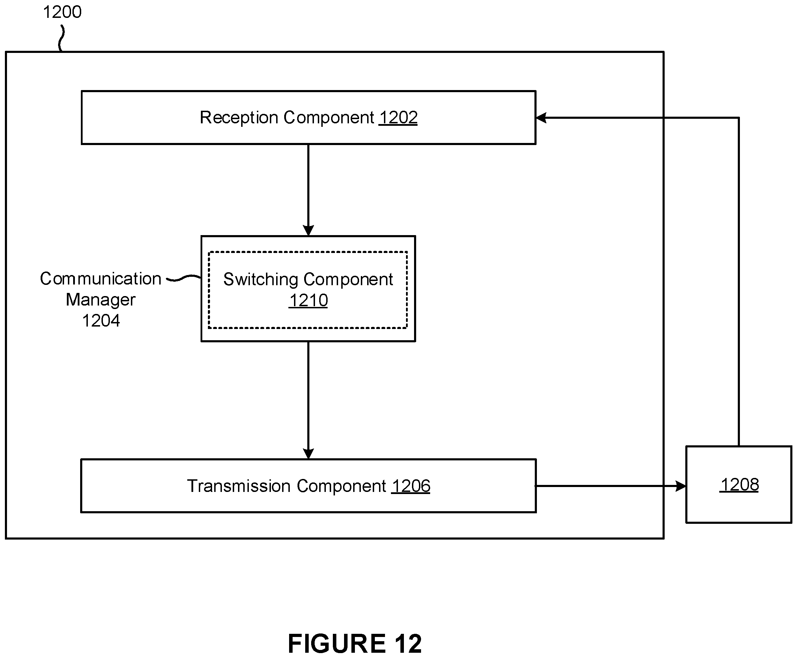

As shown in Figure 9, in some aspects, process 900 may include receiving, via a source base station that provides an MB service to a UE via a first RAT, a handover request that includes an indication that indicates at least one of an MB service associated with the UE or a frequency, of a set of frequencies of a second RAT, via which the MB service is available via the second RAT (block 910). For example, the target base station (such as by using reception component 1202, depicted in Figure 12) may receive, via a source base station that provides an MB service to a UE via a first RAT, a handover request that includes an indication that indicates at least one of an MB service associated with the UE or a frequency, of a set of frequencies of a second RAT, via which the MB service is available via the second RAT, as described above.

As further shown in Figure 9, in some aspects, process 900 may include communicating, with the UE, based at least in part on switching from a unicast DRB, that provides the MB service for the second RAT, to an MRB, that provides the MB service for the second RAT, after handover from the source base station to the target base station (block 920). For example, the target base station (such as by using reception component 1202, transmission component 1206, or switching component 1210, depicted in Figure 12) may communicate, with the UE, based at least in part on switch from a unicast DRB, that provides the MB service for the second RAT, to an MRB, that provides the MB service for the second RAT, after handover from the source base station to the target base station, as described above.

Process 900 may include additional aspects, such as any single aspect or any combination of aspects described below or in connection with one or more other processes described elsewhere herein.

Although Figure 9 shows example blocks of process 900, in some aspects, process 900 may include additional blocks, fewer blocks, different blocks, or differently arranged blocks than those depicted in Figure 9. Additionally or alternatively, two or more of the blocks of process 900 may be performed in parallel.

Figure 10 is a block diagram of an example apparatus 1000 for wireless communication in accordance with the present disclosure. The apparatus 1000 may be a UE, or a UE may include the apparatus 1000. In some aspects, the apparatus 1000 includes a reception component 1002, a communication manager 1004, and a transmission component 1006, which may be in communication with one another (for example, via one or more buses). As shown, the apparatus 1000 may communicate with another apparatus 1008 (such as a UE, a base station, or another wireless communication device) using the reception component 1002 and the transmission component 1006.

In some aspects, the apparatus 1000 may be configured to perform one or more operations described herein in connection with Figures 4A-4B, 5A-5B, and 6A-6B. Additionally or alternatively, the apparatus 1000 may be configured to perform one or more processes described herein, such as process 700 of Figure 7. In some aspects, the apparatus 1000 may include one or more components of the UE described above in connection with Figure 2.

The reception component 1002 may receive communications, such as reference signals, control information, data communications, or a combination thereof, from the apparatus 1008. The reception component 1002 may provide received communications to one or more other components of the apparatus 1000, such as the communication manager 1004. In some aspects, the reception component 1002 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components. In some aspects, the reception component 1002 may include one or more antennas, a demodulator, a MIMO detector, a receive processor, a controller/processor, a memory, or a combination thereof, of the UE described above in connection with Figure 2.

The transmission component 1006 may transmit communications, such as reference signals, control information, data communications, or a combination thereof, to the apparatus 1008. In some aspects, the communication manager 1004 may generate communications and may transmit the generated communications to the transmission component 1006 for transmission to the apparatus 1008. In some aspects, the transmission component 1006 may perform signal processing on the generated communications (such as filtering, amplification, modulation, digital-to-analog conversion, multiplexing, interleaving, mapping, or encoding, among other examples), and may transmit the processed signals to the apparatus 1008. In some aspects, the transmission component 1006 may include one or more antennas, a modulator, a transmit MIMO processor, a transmit processor, a controller/processor, a memory, or a combination thereof, of the UE described above in connection with Figure 2. In some aspects, the transmission component 1006 may be co-located with the reception component 1002 in a transceiver.

The communication manager 1004 may receive or may cause the reception component 1002 to receive, via a first RAT associated with a source base station, system information that identifies a set of frequencies of a second RAT and one or more MB services available via one or more frequencies of the set of frequencies. The communication manager 1004 may communicate, or may cause the reception component 1002 or the transmission component 1006 to communicate, with the source base station or a core network device, to trigger a switch from a first MRB, of the first RAT, to a first unicast DRB, of the first RAT, for reception of an MB service, of the one or more MB services, via the first RAT. The communication manager 1004 may transmit or may cause the transmission component 1006 to transmit, to the source base station, an indication that indicates at least one of the MB service or a frequency, of the one or more frequencies, via which the MB service is available via the second RAT. The communication manager 1004 may receive or may cause the reception component 1002 to receive, from the source base station or a target base station, an MRB configuration associated with receiving the MB service via the target base station using the second RAT. The communication manager 1004 may communicate, or may cause the reception component 1002 or the transmission component 1006 to communicate, with the target base station based at least in part on switching from a second unicast DRB, of the second RAT, to a second MRB, of the second RAT, after handover from the source base station to the target base station and based at least in part on the MRB configuration. In some aspects, the communication manager 1004 may perform one or more operations described elsewhere herein as being performed by one or more components of the communication manager 1004.

The communication manager 1004 may include a controller/processor, a memory, or a combination thereof, of the UE described above in connection with Figure 2. In some aspects, the communication manager 1004 includes a set of components, such as a triggering component 1010, a switching component 1012, a determination component 1014, a prioritization component 1016, or a combination thereof. Alternatively, the set of components may be separate and distinct from the communication manager 1004. In some aspects, one or more components of the set of components may include or may be implemented within a controller/processor, a memory, or a combination thereof, of the UE described above in connection with Figure 2. Additionally or alternatively, one or more components of the set of components may be implemented at least in part as software stored in a memory. For example, a component (or a portion of a component) may be implemented as instructions or code (for example, processor-readable code) stored in a non-transitory computer-readable medium and executable by a controller or a processor to perform the functions or operations of the component.

The reception component 1002 may receive, via a first RAT associated with a source base station, system information that identifies a set of frequencies of a second RAT and one or more MB services available via one or more frequencies of the set of frequencies. The reception component 1002, the transmission component 1006, or the triggering component 1010 may communicate, with the source base station or a core network device, to trigger a switch from a first MRB, of the first RAT, to a first unicast DRB, of the first RAT, for reception of an MB service, of the one or more MB services, via the first RAT. For example, the triggering component 1010 may trigger the switch from the first MRB, of the first RAT, to the first unicast DRB, of the first RAT, for reception of the MB service, of the one or more MB services, via the first RAT. The transmission component 1006 may transmit, to the source base station, an indication that indicates at least one of the MB service or a frequency, of the one or more frequencies, via which the MB service is available via the second RAT. The reception component 1002 may receive, from the source base station or a target base station, an MRB configuration associated with receiving the MB service via the target base station using the second RAT. The reception component 1002, the transmission component 1006, or switching component 1012 may communicate, with the target base station, based at least in part on switching from a second unicast DRB, of the second RAT, to a second MRB, of the second RAT, after handover from the source base station to the target base station and based at least in part on the MRB configuration. For example, the switching component 1012 may switch from the second unicast DRB, of the second RAT, to the second MRB, of the second RAT, after handover from the source base station to the target base station and based at least in part on the MRB configuration.

The reception component 1002 may receive a configuration that indicates a mapping between at least one of an MB session identifier, that identifies the MB service in the second RAT, and a TMGI that identifies the MB service in both the first RAT and the second RAT, or an MBMS SAI, that identifies the MB service in the first RAT, and the TMGI that identifies the MB service in both the first RAT and the second RAT.

The determination component 1014 may determine the frequency, of the set of frequencies, via which the MB service is available. The transmission component 1006 may transmit the MB service interest indication based at least in part on determining the frequency, of the set of frequencies, via which the MB service is available.

The prioritization component 1016 may prioritize one or more frequencies of the second RAT for cell reselection based at least in part on corresponding availability of the MB service on each of the one or more frequencies. The reception component 1002 may receive a configuration that indicates one or more thresholds.

The quantity and arrangement of components shown in Figure 10 are provided as an example. In practice, there may be additional components, fewer components, different components, or differently arranged components than those shown in Figure 10. Furthermore, two or more components shown in Figure 10 may be implemented within a single component, or a single component shown in Figure 10 may be implemented as multiple, distributed components. Additionally or alternatively, a set of (one or more) components shown in Figure 10 may perform one or more functions described as being performed by another set of components shown in Figure 10.

Figure 11 is a block diagram of an example apparatus 1100 for wireless communication in accordance with the present disclosure. The apparatus 1100 may be a source base station, or a source base station may include the apparatus 1100. In some aspects, the apparatus 1100 includes a reception component 1102, a communication manager 1104, and a transmission component 1106, which may be in communication with one another (for example, via one or more buses). As shown, the apparatus 1100 may communicate with another apparatus 1108 (such as a UE, a base station, or another wireless communication device) using the reception component 1102 and the transmission component 1106.

In some aspects, the apparatus 1100 may be configured to perform one or more operations described herein in connection with Figures 4A-4B, 5A-5B, and 6A-6B. Additionally or alternatively, the apparatus 1100 may be configured to perform one or more processes described herein, such as process 800 of Figure 8. In some aspects, the apparatus 1100 may include one or more components of the source base station described above in connection with Figure 2.

The reception component 1102 may receive communications, such as reference signals, control information, data communications, or a combination thereof, from the apparatus 1108. The reception component 1102 may provide received communications to one or more other components of the apparatus 1100, such as the communication manager 1104. In some aspects, the reception component 1102 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components. In some aspects, the reception component 1102 may include one or more antennas, a demodulator, a MIMO detector, a receive processor, a controller/processor, a memory, or a combination thereof, of the source base station described above in connection with Figure 2.

The transmission component 1106 may transmit communications, such as reference signals, control information, data communications, or a combination thereof, to the apparatus 1108. In some aspects, the communication manager 1104 may generate communications and may transmit the generated communications to the transmission component 1106 for transmission to the apparatus 1108. In some aspects, the transmission component 1106 may perform signal processing on the generated communications (such as filtering, amplification, modulation, digital-to-analog conversion, multiplexing, interleaving, mapping, or encoding, among other examples), and may transmit the processed signals to the apparatus 1108. In some aspects, the transmission component 1106 may include one or more antennas, a modulator, a transmit MIMO processor, a transmit processor, a controller/processor, a memory, or a combination thereof, of the source base station described above in connection with Figure 2. In some aspects, the transmission component 1106 may be co-located with the reception component 1102 in a transceiver.

The communication manager 1104 may transmit or may cause the transmission component 1106 to transmit, via a first RAT, system information that identifies a set of frequencies of a second RAT and one or more MB services available via one or more frequencies of the set of frequencies. The communication manager 1104 may communicate, or may cause the reception component 1102 or the transmission component 1106 to communicate, with a UE, to switch from a first MRB, of the first RAT, to a first unicast DRB, of the first RAT, for transmission of an MB service, of the one or more MB services, to the UE via the first RAT. The communication manager 1104 may receive or may cause the reception component 1102 to receive, from the UE, an indication that indicates at least one of the MB service or a frequency, of the one or more frequencies, via which the MB service is available via the second RAT. The communication manager 1104 may perform a handover to a target base station based at least in part on the indication. In some aspects, the communication manager 1104 may perform one or more operations described elsewhere herein as being performed by one or more components of the communication manager 1104.

The communication manager 1104 may include a controller/processor, a memory, a scheduler, a communication unit, or a combination thereof, of the source base station described above in connection with Figure 2. In some aspects, the communication manager 1104 includes a set of components, such as a switching component 1110, a handover component 1112, or a combination thereof. Alternatively, the set of components may be separate and distinct from the communication manager 1104. In some aspects, one or more components of the set of components may include or may be implemented within a controller/processor, a memory, a scheduler, a communication unit, or a combination thereof, of the source base station described above in connection with Figure 2. Additionally or alternatively, one or more components of the set of components may be implemented at least in part as software stored in a memory. For example, a component (or a portion of a component) may be implemented as instructions or code (for example, processor-readable code) stored in a non-transitory computer-readable medium and executable by a controller or a processor to perform the functions or operations of the component.

The transmission component 1106 may transmit, via a first RAT, system information that identifies a set of frequencies of a second RAT and one or more MB services available via one or more frequencies of the set of frequencies. The reception component 1102, the transmission component 1106, or the switching component 1110 may communicate, with a UE, to switch from a first MRB, of the first RAT, to a first unicast DRB, of the first RAT, for transmission of an MB service, of the one or more MB services, to the UE via the first RAT. For example, the switching component 1110 may switch from the first MRB, of the first RAT, to the first unicast DRB, of the first RAT, for transmission of the MB service, of the one or more MB services, to the UE via the first RAT. The reception component 1102 may receive, from the UE, an indication that indicates at least one of the MB service or a frequency, of the one or more frequencies, via which the MB service is available via the second RAT. The handover component 1112 may perform a handover to a target base station based at least in part on the indication.

The transmission component 1106 may transmit a configuration that indicates a mapping between at least one of an MB session identifier, that identifies the MB service in the second RAT, and a TMGI that identifies the MB service in both the first RAT and the second RAT, or an MBMS SAI, that identifies the MB service in the first RAT, and the TMGI that identifies the MB service in both the first RAT and the second RAT.

The transmission component 1106 may transmit a configuration that indicates one or more radio channel parameter thresholds to be used to trigger a switch from the first MRB to the first unicast DRB.

The quantity and arrangement of components shown in Figure 11 are provided as an example. In practice, there may be additional components, fewer components, different components, or differently arranged components than those shown in Figure 11. Furthermore, two or more components shown in Figure 11 may be implemented within a single component, or a single component shown in Figure 11 may be implemented as multiple, distributed components. Additionally or alternatively, a set of (one or more) components shown in Figure 11 may perform one or more functions described as being performed by another set of components shown in Figure 11.

Figure 12 is a block diagram of an example apparatus 1200 for wireless communication in accordance with the present disclosure. The apparatus 1200 may be a target base station, or a target base station may include the apparatus 1200. In some aspects, the apparatus 1200 includes a reception component 1202, a communication manager 1204, and a transmission component 1206, which may be in communication with one another (for example, via one or more buses). As shown, the apparatus 1200 may communicate with another apparatus 1208 (such as a UE, a base station, or another wireless communication device) using the reception component 1202 and the transmission component 1206.

In some aspects, the apparatus 1200 may be configured to perform one or more operations described herein in connection with Figures 4A-4B, 5A-5B, and 6A-6B. Additionally or alternatively, the apparatus 1200 may be configured to perform one or more processes described herein, such as process 900 of Figure 9. In some aspects, the apparatus 1200 may include one or more components of the target base station described above in connection with Figure 2.

The reception component 1202 may receive communications, such as reference signals, control information, data communications, or a combination thereof, from the apparatus 1208. The reception component 1202 may provide received communications to one or more other components of the apparatus 1200, such as the communication manager 1204. In some aspects, the reception component 1202 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components. In some aspects, the reception component 1202 may include one or more antennas, a demodulator, a MIMO detector, a receive processor, a controller/processor, a memory, or a combination thereof, of the target base station described above in connection with Figure 2.

The transmission component 1206 may transmit communications, such as reference signals, control information, data communications, or a combination thereof, to the apparatus 1208. In some aspects, the communication manager 1204 may generate communications and may transmit the generated communications to the transmission component 1206 for transmission to the apparatus 1208. In some aspects, the transmission component 1206 may perform signal processing on the generated communications (such as filtering, amplification, modulation, digital-to-analog conversion, multiplexing, interleaving, mapping, or encoding, among other examples), and may transmit the processed signals to the apparatus 1208. In some aspects, the transmission component 1206 may include one or more antennas, a modulator, a transmit MIMO processor, a transmit processor, a controller/processor, a memory, or a combination thereof, of the target base station described above in connection with Figure 2. In some aspects, the transmission component 1206 may be co-located with the reception component 1202 in a transceiver.

The communication manager 1204 may receive or may cause the reception component 1202 to receive, via a source base station that provides an MB service to a UE via a first RAT, a handover request that includes an indication that indicates at least one of an MB service associated with the UE or a frequency, of a set of frequencies of a second RAT, via which the MB service is available via the second RAT. The communication manager 1204 may communicate, or may cause the reception component 1202 or the transmission component 1206 to communicate, with the UE, based at least in part on switching from a unicast DRB, that provides the MB service for the second RAT, to an MRB, that provides the MB service for the second RAT, after handover from the source base station to the target base station. In some aspects, the communication manager 1204 may perform one or more operations described elsewhere herein as being performed by one or more components of the communication manager 1204.

The communication manager 1204 may include a controller/processor, a memory, a scheduler, a communication unit, or a combination thereof, of the target base station described above in connection with Figure 2. In some aspects, the communication manager 1204 includes a set of components, such as a switching component 1210. Alternatively, the set of components may be separate and distinct from the communication manager 1204. In some aspects, one or more components of the set of components may include or may be implemented within a controller/processor, a memory, a scheduler, a communication unit, or a combination thereof, of the target base station described above in connection with Figure 2. Additionally or alternatively, one or more components of the set of components may be implemented at least in part as software stored in a memory. For example, a component (or a portion of a component) may be implemented as instructions or code (for example, processor-readable code) stored in a non-transitory computer-readable medium and executable by a controller or a processor to perform the functions or operations of the component.

The reception component 1202 may receive, via a source base station that provides an MB service to a UE via a first RAT, a handover request that includes an indication that indicates at least one of an MB service associated with the UE or a frequency, of a set of frequencies of a second RAT, via which the MB service is available via the second RAT. The reception component 1202, the transmission component 1206, or the switching component 1210 may communicate, with the UE, based at least in part on switching from a unicast DRB, that provides the MB service for the second RAT, to an MRB, that provides the MB service for the second RAT, after handover from the source base station to the target base station. For example, the switching component 1210 may switch from the unicast DRB, that provides the MB service for the second RAT, to the MRB, that provides the MB service for the second RAT, after handover from the source base station to the target base station.

The quantity and arrangement of components shown in Figure 12 are provided as an example. In practice, there may be additional components, fewer components, different components, or differently arranged components than those shown in Figure 12. Furthermore, two or more components shown in Figure 12 may be implemented within a single component, or a single component shown in Figure 12 may be implemented as multiple, distributed components. Additionally or alternatively, a set of (one or more) components shown in Figure 12 may perform one or more functions described as being performed by another set of components shown in Figure 12.

The foregoing disclosure provides illustration and description but is not intended to be exhaustive or to limit the aspects to the precise forms disclosed. Modifications and variations may be made in light of the above disclosure or may be acquired from practice of the aspects.

As used herein, the term "component" is intended to be broadly construed as hardware or a combination of hardware and software. "Software" shall be construed broadly to mean instructions, instruction sets, code, code segments, program code, programs, subprograms, software modules, applications, software applications, software packages, routines, subroutines, objects, executables, threads of execution, procedures, or functions, among other examples, whether referred to as software, firmware, middleware, microcode, hardware description language, or otherwise. As used herein, a "processor" is implemented in hardware or a combination of hardware and software. It will be apparent that systems or methods described herein may be implemented in different forms of hardware or a combination of hardware and software. The actual specialized control hardware or software code used to implement these systems or methods is not limiting of the aspects. Thus, the operation and behavior of the systems or methods are described herein without reference to specific software code, since those skilled in the art will understand that software and hardware can be designed to implement the systems or methods based, at least in part, on the description herein.

As used herein, "satisfying a threshold" may, depending on the context, refer to a value being greater than the threshold, greater than or equal to the threshold, less than the threshold, less than or equal to the threshold, equal to the threshold, or not equal to the threshold, among other examples.

Even though particular combinations of features are recited in the claims or disclosed in the specification, these combinations are not intended to limit the disclosure of various aspects. Many of these features may be combined in ways not specifically recited in the claims or disclosed in the specification. The disclosure of various aspects includes each dependent claim in combination with every other claim in the claim set. As used herein, a phrase referring to "at least one of" a list of items refers to any combination of those items, including single members. As an example, "at least one of: a, b, or c" is intended to cover a, b, c, a + b, a + c, b + c, and a + b + c, as well as any combination with multiples of the same element (for example, a + a, a + a + a, a + a + b, a + a + c, a + b + b, a + c + c, b + b, b + b + b, b + b + c, c + c, and c + c + c, or any other ordering of a, b, and c).

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the terms "set" and "group" are intended to include one or more items and may be used interchangeably with "one or more." Where only one item is intended, the phrase "only one" or similar language is used. Also, as used herein, the terms "has," "have," "having," and similar terms are intended to be open-ended terms that do not limit an element that they modify (for example, an element "having" A may also have B). Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (for example, if used in combination with "either" or "only one of').

## Claims

1. A method (700) of wireless communication performed by a user equipment, UE, comprising:
receiving (710), via a first radio access technology, RAT associated with a source base station, system information that identifies a set of frequencies of a second RAT and one or more multicast or broadcast, MB services available via one or more frequencies of the set of frequencies;
communicating, (720) with the source base station or a core network device, to trigger a switch from a first multicast radio bearer, MRB, of the first RAT, to a first unicast dedicated radio bearer, DRB, of the first RAT, for reception of an MB service, of the one or more MB services, via the first RAT;
transmitting (730), to the source base station, an indication that indicates at least one of the MB service or a frequency, of the one or more frequencies, via which the MB service is available via the second RAT;
receiving (740), from the source base station or a target base station, an MRB configuration associated with receiving the MB service via the target base station using the second RAT; and
communicating (750) with the target base station based at least in part on switching from a second unicast DRB, of the second RAT, to a second MRB, of the second RAT, after handover from the source base station to the target base station and based at least in part on the MRB configuration.

2. The method (700) of claim 1, wherein the system information further indicates at least one of:
one or more cells via which the one or more MB services are available,
whether the MB service is a multicast service or a broadcast service, or
a carrier type associated with the MB service.

3. The method (700) of claim 1, further comprising receiving a configuration that indicates a mapping between at least one of:
an MB session identifier, that identifies the MB service in the second RAT, and a temporary mobile group identity, TMGI that identifies the MB service in both the first RAT and the second RAT, or
a multicast broadcast multimedia service, MBMS service area identity, SAI, that identifies the MB service in the first RAT, and the TMGI that identifies the MB service in both the first RAT and the second RAT.

4. The method (700) of claim 1, wherein transmitting the indication comprises transmitting an MB service interest indication that indicates the MB service and a frequency, of the set of frequencies, via which the MB service is available.

5. The method (700) of claim 4, further comprising determining the frequency, of the set of frequencies, via which the MB service is available; and
wherein transmitting the MB service interest indication comprises transmitting the MB service interest indication based at least in part on determining the frequency, of the set of frequencies, via which the MB service is available.

6. The method (700) of claim 4, wherein the MB service interest indication indicates one or more first frequencies, of the first RAT, via which the MB service is available, and also indicates one or more second frequencies, of the second RAT, via which the MB service is available, wherein the one or more second frequencies are included in the set of frequencies of the second RAT.

7. The method (700) of claim 1, further comprising prioritizing one or more frequencies of the second RAT for cell reselection based at least in part on corresponding availability of the MB service on each of the one or more frequencies.

8. The method (700) of claim 1, wherein the handover is a conditional handover.

9. The method (700) of claim 1, wherein communicating to trigger the switch from the first MRB to the first unicast DRB comprises transmitting a signal to trigger the switch based at least in part on comparing one or more radio channel parameters to one or more thresholds, further comprising receiving a configuration that indicates the one or more thresholds.

10. An apparatus for wireless communications, comprising means configured for executing the method of any one of claims 1 to 9.

11. A method (800) of wireless communication performed by a source base station, comprising:
Transmitting (810), via a first radio access technology, RAT, system information that identifies a set of frequencies of a second RAT and one or more multicast or broadcast, MB services available via one or more frequencies of the set of frequencies;
Communicating (820), with a user equipment, UE, to switch from a first multicast radio bearer, MRB, of the first RAT, to a first unicast dedicated radio bearer, DRB, of the first RAT, for transmission of an MB service, of the one or more MB services, to the UE via the first RAT;
Receiving (830), from the UE, an indication that indicates at least one of the MB service or a frequency, of the one or more frequencies, via which the MB service is available via the second RAT; and
performing (849) a handover to a target base station based at least in part on the indication.

12. The method (800) of claim 11, further comprising transmitting a configuration that indicates a mapping between at least one of:
an MB session identifier, that identifies the MB service in the second RAT, and a temporary mobile group identity, TMGI that identifies the MB service in both the first RAT and the second RAT, or
a multicast broadcast multimedia service, MBMS service area identity, SAI, that identifies the MB service in the first RAT, and the TMGI that identifies the MB service in both the first RAT and the second RAT.

13. The method (800) of claim 11, wherein receiving the indication comprises receiving an MB service interest indication that indicates the MB service and a frequency, of the set of frequencies, via which the MB service is available, wherein the MB service interest indication indicates one or more first frequencies, of the first RAT, via which the MB service is available, and also indicates one or more second frequencies, of the second RAT, via which the MB service is available, wherein the one or more second frequencies are included in the set of frequencies of the second RAT.

14. An apparatus for wireless communications, comprising means configured for executing the method of any one of claims 11 to 13.

15. A computer program comprising program instructions which, when the program is executed by a computer associated with a user equipment, cause the user equipment to carry out all steps of the method of anyone of claims 1 to 9 or when the program is executed by a computer associated with a source base station, cause the source base station to carry out all the steps of the method of anyone of claims 11 to 13.

## Patentansprüche

1. Verfahren (700) zur drahtlosen Kommunikation, das von einem Benutzergerät, UE, ausgeführt wird, umfassend:
Empfangen (710), über eine erste Funkzugangstechnologie, RAT, die einer Ursprungs-Basisstation zugeordnet ist, von Systeminformation, die einen Satz von Frequenzen einer zweiten RAT und einen oder mehrere Multicast- oder Broadcast-Dienste, MB-Dienste, identifiziert, die über eine oder mehrere Frequenzen des Satzes von Frequenzen verfügbar sind;
Kommunizieren (720) mit der Ursprungs-Basisstation oder einer Kernnetzwerkvorrichtung, um einen Wechsel von einem ersten Multicast-Funkträger, MRB, der ersten RAT zu einem ersten dedizierten Unicast-Funkträger, DRB, der ersten RAT auszulösen, zum Empfang eines MB-Dienstes des einen oder der mehreren MB-Dienste über die erste RAT;
Übertragen (730), an die Ursprungs-Basisstation, einer Anzeige, die zumindest einen des MB-Dienstes oder eine Frequenz der einen oder mehreren Frequenzen anzeigt, über die der MB-Dienst über die zweite RAT verfügbar ist;
Empfangen (740), von der Ursprungs-Basisstation oder einer Ziel-Basisstation, einer MRB-Konfiguration, die dem Empfangen des MB-Dienstes über die Ziel-Basisstation unter Verwendung der zweiten RAT zugeordnet ist; und
Kommunizieren (750) mit der Ziel-Basisstation basierend zumindest teilweise auf dem Wechsel von einem zweiten Unicast-DRB der zweiten RAT zu einem zweiten MRB der zweiten RAT, nach dem Handover von der Ursprungs-Basisstation an die Ziel-Basisstation und basierend zumindest teilweise auf der MRB-Konfiguration.

2. Verfahren (700) gemäß Anspruch 1, wobei die System-Information weiterhin zumindest eines anzeigt aus:
eine oder mehrere Zellen, über die der eine oder die mehreren MB-Dienste verfügbar sind,
ob der MB-Dienst ein Multicast-Dienst oder ein Broadcast-Dienst ist, oder
einen Trägertyp, der dem MB-Dienst zugeordnet ist.

3. Verfahren (700) gemäß Anspruch 1, weiterhin umfassend Empfangen einer Konfiguration, die eine Zuordnung zwischen zumindest einem anzeigt aus:
einer MB-Sitzungskennung, die den MB-Dienst in der zweiten RAT identifiziert, und einer temporären Mobilgruppenidentität, TMGI, die den MB-Dienst in sowohl der ersten RAT als auch der zweiten RAT identifiziert, oder
einer Multicast-Broadcast-Multimedia-Dienst, MBMS, Dienstbereichsidentität, SAI, die den MB-Dienst in der ersten RAT identifiziert, und der TMGI, die den MB-Dienst in sowohl der ersten RAT als auch der zweiten RAT identifiziert.

4. Verfahren (700) gemäß Anspruch 1, wobei Übertragen der Anzeige ein Übertragen einer MB-Dienst-Interesse-Anzeige umfasst, die den MB-Dienst und eine Frequenz des Satzes von Frequenzen anzeigt, über die der MB-Dienst verfügbar ist.

5. Verfahren (700) gemäß Anspruch 4, weiterhin umfassend Bestimmen der Frequenz des Satzes von Frequenzen, über die der MB-Dienst verfügbar ist; und
wobei Übertragen der MB-Dienst-Interesse-Anzeige Übertragen der MB-Dienst-Interesse-Anzeige basierend zumindest teilweise auf Bestimmen der Frequenz des Satzes von Frequenzen umfasst, über die der MB-Dienst verfügbar ist.

6. Verfahren (700) gemäß Anspruch 4, wobei die MB-Dienst-Interesse-Anzeige eine oder mehrere erste Frequenzen der ersten RAT anzeigt, über die der MB-Dienst verfügbar ist, und auch eine oder mehrere zweite Frequenzen der zweiten RAT anzeigt, über die der MB-Dienst verfügbar ist, wobei die eine oder mehreren zweiten Frequenzen in dem Satz von Frequenzen der zweiten RAT enthalten sind.

7. Verfahren (700) gemäß Anspruch 1, weiterhin umfassend Priorisieren einer oder mehrerer Frequenzen der zweiten RAT für Zellen-Neuauswahl basierend zumindest teilweise auf entsprechender Verfügbarkeit des MB-Dienstes auf jeder der einen oder mehreren Frequenzen.

8. Verfahren (700) gemäß Anspruch 1, wobei das Handover ein bedingtes Handover ist.

9. Verfahren (700) gemäß Anspruch 1, wobei Kommunizieren zum Auslösen des Wechsels von dem ersten MRB zu dem ersten Unicast-DRB Übertragen eines Signals zum Auslösen des Wechsels basierend zumindest teilweise auf Vergleichen eines oder mehrerer Funkkanalparameter mit einem oder mehreren Schwellenwerten umfasst, weiterhin umfassend Empfangen einer Konfiguration, die den einen oder die mehreren Schwellenwerte anzeigt.

10. Vorrichtung zur drahtlosen Kommunikation, umfassend Mittel, die zum Ausführen des Verfahrens gemäß einem der Ansprüche 1 bis 9 konfiguriert sind.

11. Verfahren (800) zur drahtlosen Kommunikation, das von einer Ursprungsbasisstation ausgeführt wird, umfassend:
Übertragen (810), über eine erste Funkzugangstechnologie, RAT, von Systeminformation, die einen Satz von Frequenzen einer zweiten RAT und einen oder mehrere Multicast- oder Broadcast-Dienste, MB-Dienste, identifiziert, die über eine oder mehrere Frequenzen des Satzes von Frequenzen verfügbar sind;
Kommunizieren (820), mit einem Benutzergerät, UE, zum Wechseln von einem ersten Multicast-Funkträger, MRB, der ersten RAT zu einem ersten dedizierten Unicast-Funkträger, DRB, der ersten RAT, zur Übertragung eines MB-Dienstes des einen oder der mehreren MB-Dienste an das UE über die erste RAT;
Empfangen (830), von dem UE, einer Anzeige, die zumindest eines von dem MB-Dienst oder einer Frequenz der einen oder mehreren Frequenzen anzeigt, über die der MB-Dienst über die zweite RAT verfügbar ist; und
Ausführen (849) eines Handovers an eine Ziel-Basisstation basierend zumindest teilweise auf der Anzeige.

12. Verfahren (800) gemäß Anspruch 11, weiterhin umfassend Übertragen einer Konfiguration, die eine Zuordnung zwischen zumindest einem anzeigt aus:
einer MB-Sitzungskennung, die den MB-Dienst in der zweiten RAT identifiziert, und einer temporären Mobilgruppenidentität, TMGI, die den MB-Dienst in sowohl der ersten RAT als auch der zweiten RAT identifiziert, oder
einer Multicast-Broadcast-Multimedia-Dienst, MBMS, Dienstbereichsidentität, SAI, die den MB-Dienst in der ersten RAT identifiziert, und der TMGI, die den MB-Dienst in sowohl der ersten RAT als auch der zweiten RAT identifiziert.

13. Verfahren (800) gemäß Anspruch 11, wobei Empfangen der Anzeige Empfangen einer MB-Dienst-Interesse-Anzeige umfasst, die den MB-Dienst und eine Frequenz des Satzes von Frequenzen anzeigt, über die der MB-Dienst verfügbar ist, wobei die MB-Dienst-Interesse-Anzeige eine oder mehrere erste Frequenzen der ersten RAT anzeigt, über die der MB-Dienst verfügbar ist, und auch eine oder mehrere zweite Frequenzen der zweiten RAT anzeigt, über die der MB-Dienst verfügbar ist, wobei die eine oder mehreren zweiten Frequenzen in dem Satz von Frequenzen der zweiten RAT enthalten sind.

14. Vorrichtung zur drahtlosen Kommunikation, umfassend Mittel, die zum Ausführen des Verfahrens gemäß einem der Ansprüche 11 bis 13 konfiguriert sind.

15. Computerprogramm, umfassend Programmanweisungen, die, wenn das Programm von einem Computer ausgeführt wird, der einem Benutzergerät zugeordnet ist, das Benutzergerät veranlassen, alle Schritte des Verfahrens gemäß einem der Ansprüche 1 bis 9 auszuführen, oder wenn das Programm von einem Computer ausgeführt wird, der einer Ursprungs-Basisstation zugeordnet ist, die Ursprungs-Basisstation veranlassen, alle Schritte des Verfahrens gemäß einem der Ansprüche 11 bis 13 auszuführen.

## Revendications

1. Un procédé (700) de communication sans fil réalisé par un équipement utilisateur, UE, comprenant :
la réception (710), via une première technologie d'accès radio, RAT, associée à une station de base source, d'une information de système qui identifie un ensemble de fréquences d'une deuxième RAT et un ou plusieurs services de broadcast ou multicast, MB, disponibles via une ou plusieurs fréquences de l'ensemble de fréquences ;
la communication (720), avec la station de base source ou un dispositif de réseau central, pour déclencher une commutation d'un premier support radio multicast, MRB, de la première RAT, à un premier support radio dédié, DRB, unicast de la première RAT, pour la réception d'un service MB, parmi les un ou plusieurs services MB, via la première RAT;
la transmission (730), à la station de base source, d'une indication qui indique au moins un parmi le service MB ou une fréquence, parmi les une ou plusieurs fréquences, via laquelle le service MB est disponible via la deuxième RAT ;
la réception (740), à partir de la station de base source ou d'une station de base cible, d'une configuration de MRB associée à la réception du service MB via la station de base cible en utilisant la deuxième RAT ; et
la communication (750), avec la station de base cible sur la base au moins en partie de la commutation d'un deuxième DRB unicast, de la deuxième RAT, à un deuxième MRB, de la deuxième RAT, après un handover de la station de base source à la station de base cible et sur la base au moins en partie de la configuration de MRB.

2. Le procédé (700) selon la revendication 1, dans lequel l'information de système indique en outre au moins un parmi :
une ou plusieurs cellules via lesquelles les un ou plusieurs services MB sont disponibles,
si le service MB est un service de multicast ou un service de broadcast, ou
un type de porteuse associé au service MB.

3. Le procédé (700) selon la revendication 1, comprenant en outre la réception d'une configuration qui indique un mappage entre au moins un parmi :
un identifiant de session MB, qui identifie le service MB dans la deuxième RAT, et une identité de groupe mobile temporaire, TMGI, qui identifie le service MB à la fois dans la première RAT et la deuxième RAT, ou
une identité de zone de service, SAI, de services multimédia de broadcast multicast, MBMS, qui identifie le service MB dans la première RAT, et la TMGI qui identifie le service MB à la fois dans la première RAT et la deuxième RAT.

4. Le procédé (700) selon la revendication 1, dans lequel la transmission de l'indication comprend la transmission d'une indication d'intérêt de service MB qui indique le service MB et une fréquence, de l'ensemble de fréquences, via laquelle le service MB est disponible.

5. Le procédé (700) selon la revendication 4, comprenant en outre la détermination de la fréquence, de l'ensemble de fréquences, via laquelle le service MB est disponible ; et dans lequel la transmission de l'indication d'intérêt de service MB comprend la transmission de l'indication d'intérêt de service MB sur la base au moins en partie de la détermination de la fréquence, de l'ensemble de fréquences, via laquelle le service MB est disponible.

6. Le procédé (700) selon la revendication 4, dans lequel l'indication d'intérêt de service MB indique une ou plusieurs premières fréquences, de la première RAT, via lesquelles le service MB est disponible, et indique également une ou plusieurs deuxièmes fréquences, de la deuxième RAT, via lesquelles le service MB est disponible, dans lequel les une ou plusieurs deuxièmes fréquences sont comprises dans l'ensemble de fréquences de la deuxième RAT.

7. Le procédé (700) selon la revendication 1, comprenant en outre la priorisation d'une ou plusieurs fréquences de la deuxième RAT pour une resélection de cellule sur la base au moins en partie d'une disponibilité correspondante du service MB sur chacune des une ou plusieurs fréquences.

8. Le procédé (700) selon la revendication 1, dans lequel le handover est un handover conditionnel.

9. Le procédé (700) selon la revendication 1, dans lequel la communication pour déclencher la commutation du premier MRB au premier DRB unicast comprend la transmission d'un signal pour déclencher la commutation sur la base au moins en partie de la comparaison d'un ou plusieurs paramètres de canal radio à un ou plusieurs seuils, comprenant en outre la réception d'une configuration qui indique les un ou plusieurs seuils.

10. Un appareil pour la communication sans fil, comprenant des moyens configurés pour réaliser le procédé selon l'une des revendications 1 à 9.

11. Un procédé (800) de communication sans fil réalisé par une station de base source, comprenant :
la transmission (810), via une première technologie d'accès radio, RAT, d'une information de système qui identifie un ensemble de fréquences d'une deuxième RAT et
un ou plusieurs services de broadcast ou multicast, MB, disponibles via une ou plusieurs fréquences de l'ensemble de fréquences ;
la communication (820), avec un équipement utilisateur, UE, pour commuter d'un premier support radio multicast, MRB, de la première RAT, à un premier support radio dédié, DRB, unicast de la première RAT, pour la transmission d'un service MB, parmi les un ou plusieurs services MB, à l'UE via la première RAT ;
la réception (830), à partir de l'UE, d'une indication qui indique au moins un parmi le service MB ou une fréquence, parmi les une ou plusieurs fréquences, via laquelle le service MB est disponible via la deuxième RAT ; et
la réalisation (849) d'un handover vers une station de base cible sur la base au moins en partie de l'indication.

12. Le procédé (800) selon la revendication 11, comprenant en outre la transmission d'une configuration qui indique un mappage entre au moins un parmi :
un identifiant de session MB, qui identifie le service MB dans la deuxième RAT, et une identité de groupe mobile temporaire, TMGI, qui identifie le service MB à la fois dans la première RAT et la deuxième RAT, ou
une identité de zone de service, SAI, de services multimédia de broadcast multicast, MBMS, qui identifie le service MB dans la première RAT, et la TMGI qui identifie le service MB à la fois dans la première RAT et la deuxième RAT.

13. Le procédé (800) selon la revendication 11, dans lequel la réception de l'indication comprend la réception d'une indication d'intérêt de service MB qui indique le service MB et une fréquence, de l'ensemble de fréquences, via laquelle le service MB est disponible, dans lequel l'indication d'intérêt de service MB indique une ou plusieurs premières fréquences, de la première RAT, via lesquelles le service MB est disponible, et indique également une ou plusieurs deuxièmes fréquences, de la deuxième RAT, via lesquelles le service MB est disponible, dans lequel les une ou plusieurs deuxièmes fréquences sont comprises dans l'ensemble de fréquences de la deuxième RAT.

14. Un appareil pour la communication sans fil, comprenant des moyens configurés pour réaliser le procédé selon l'une des revendications 11 à 13.

15. Un programme de calculateur comprenant des instructions de programme qui, quand le programme est exécuté par un calculateur associé à un équipement utilisateur, amènent l'équipement utilisateur à réaliser toutes les étapes du procédé selon l'une des revendications 1 à 9 ou, quand le programme est exécuté par un calculateur associé à une station de base source, amènent la station de base source à réaliser toutes les étapes du procédé selon l'une des revendications 11 à 13.
